# EUROPÄISCHE PATENTSCHRIFT

(11) **EP 4 108 482 B1**
(45) Veröffentlichungstag und Bekanntmachung des Hinweises auf die Patenterteilung: **02.04.2025**
(21) Anmeldenummer: 22180721.7
(22) Anmeldetag: 23.06.2022
(51) Int. Cl.: B60D 1/54, B60D 1/06

(54) **ANHÄNGEVORRICHTUNG ZUR ANBRINGUNG AN EINEM HECK EINES FAHRZEUGS**
TRAILER DEVICE FOR ATTACHMENT TO A REAR OF A VEHICLE
DISPOSITIF D'ATTELAGE DESTINÉ À ÊTRE FIXÉ À UN ARRIÈRE D'UN VÉHICULE

(30) Priorität: 23.06.2021 DE 102021116182
(43) Veröffentlichungstag der Anmeldung: 28.12.2022
(73) Patentinhaber: MVG Metallverarbeitungsgesellschaft mbH, 52249 Eschweiler (DE)
(72) Erfinder: Gardenier, Maurice, 52353 Düren (DE); Michels, Max, 52062 Aachen (DE)
(74) Vertreter: Bauer, Dirk

(56) Entgegenhaltungen:
- EP-A1- 1 836 062
- EP-A1- 1 836 062
- EP-A1- 3 708 391
- EP-A2- 1 090 782
- EP-B1- 1 836 062
- WO-A1-2006/068478
- DE-A1- 102006 041 699
- DE-U1- 29 824 338

## Beschreibung

Die Erfindung betrifft eine Anhängevorrichtung zur Anbringung an einem Heck eines Fahrzeugs gemäß dem Oberbegriff des Anspruchs 1.

Anhängevorrichtungen zur Anbringung an einem Heck eines Fahrzeugs sind dem Stand der Technik in vielfältiger Ausgestaltung als bekannt zu entnehmen. Mittels solcher Anhängevorrichtungen lassen sich Zusatzgeräte, beispielsweise ein Anhänger, an das Fahrzeug ankuppeln. Während Anhängevorrichtungen einerseits für derartige Anwendungen nützlich sind, behindern sie andererseits bei anderen Tätigkeiten. In diesem Zusammenhang sind beispielsweise Rangieren auf engem Raum, Rückwärtsfahren im Allgemeinen oder Einparken zu nennen. Hierbei laden die meisten Anhängevorrichtungen nach hinten aus, das heißt, sie überragen regelmäßig sogar einen Stoßfänger, der eigentlich einen Abschluss des Fahrzeugs nach hinten bildet. Insbesondere bei neuen Fahrzeugen sind Abstandsmessgeräte zur Erleichterung beispielsweise des Einparkens eingebaut. Diese Abstandsmessgeräte sind allerdings auf den baulich festgelegten Abschluss des Fahrzeugs ausgelegt, mithin kalibriert. Demzufolge kann es vorkommen, dass sich der Fahrer fälschlicherweise auf Signale des Abstandsmessgerätes verlässt. Mit anderen Worten bedenkt der Fahrer nicht, dass die Anhängevorrichtung vorhanden ist, verlässt sich auf das Signal des Abstandsmessgerätes und verursacht folglich einen Unfall.

Aus diesem Grund sind dem Stand der Technik Weiterentwicklungen ursprünglicher Anhängevorrichtungen als bekannt zu entnehmen, die in unterschiedlicher Weise zumindest temporär derart an dem Fahrzeug anordbar sind, dass sie nicht über den baulich festgelegten Abschluss des Fahrzeugs hervorstehen.

Eine solche Anhängevorrichtung zur Anbringung an einem Heck eines Fahrzeugs umfasst eine mit einem Fahrzeugteil in Kraft übertragender Weise verbindbare Schwenklagereinheit, die eine vertikal verlaufende erste Schwenkachse definiert. Das Fahrzeugteil kann beispielsweise ein Querträger sein, der entweder bereits baulich, das heißt vom Werk aus, an dem Fahrzeug vorgesehen ist, oder als Teil eines Lieferumfangs der Anhängevorrichtung enthalten ist. In diesem Zusammenhang wird beziehungsweise ist der Querträger mit dem Fahrzeug, insbesondere dessen Karosserie, gegebenenfalls unter Zuhilfenahme von Halteblechen, verschraubt und ist somit fest mit diesem verbunden. Außerdem umfasst die Anhängevorrichtung einen in oder an der Schwenklagereinheit um die erste Schwenkachse schwenkbar gelagerten Schwenklagerkörper, der eine zweite Schwenkachse definiert. Weiterhin weist die Anhängevorrichtung eine Kugelstange auf, die an einem ersten Ende um die zweite Schwenkachse schwenkbar und gelenkig mit dem Schwenklagerkörper verbunden ist und an einem gegenüberliegenden freien zweiten Ende eine Kupplungskugel aufweist. Des Weiteren umfasst die Anhängevorrichtung eine Antriebseinrichtung, mittels der die Kugelstange von einer Betriebsposition, in der sich die Kupplungskugel frei zugänglich hinter dem Heck des Fahrzeugs befindet, in eine Parkposition sowie umgekehrt überführbar ist, in der sich die Kupplungskugel verdeckt unterhalb des Fahrzeugs befindet. Hierbei ist die Kugelstange während der Überführung von der Betriebsposition in die Parkposition und umgekehrt relativ zu dem Schwenklagerkörper rotatorisch um die zweite Schwenkachse bewegbar. Weiterhin umfasst die Anhängevorrichtung eine Kulissenführung, mittels welcher der Schwenklagerkörper während der Überführung von der Betriebsposition in die Parkposition sowie umgekehrt sowohl translatorisch in vertikale Richtung als auch rotatorisch um die vertikal ausgerichtete erste Schwenkachse bewegbar ist. Hierbei sind ein Kulissenstein an oder in der Schwenklagereinheit oder dem Schwenklagerkörper und eine mit dem Kulissenstein zusammenwirkende Kulissenbahn an oder in dem Schwenklagerkörper oder der Schwenklagereinheit angeordnet. Des Weiteren weist die Anhängevorrichtung mindestens eine Blockiereinrichtung auf, mittels der - jeweils sowohl in der Parkposition als auch in der Betriebsposition - der Schwenklagerkörper relativ zu der Schwenklagereinheit und die Kugelstange relativ zu dem Schwenklagerkörper oder der Schwenklagereinheit blockierbar sind.

### Stand der Technik

Der deutschen Patentanmeldung DE 10 2006 035 261 ist eine derartige, einfach auch als Anhängekupplung bezeichnete, Anhängevorrichtung als bekannt zu entnehmen.

Die Anhängekupplung umfasst einen Kugelhals, der zwischen einer Betriebsposition und einer Parkposition bewegbar ist. Hierbei umfasst die Anhängekupplung einen an einem ersten Ende angeordneten Schwenklagerkörper und eine an einem zweiten Ende angeordnete Kupplungskugel. Weiterhin weist die Anhängekupplung eine fahrzeugfest angeordnete Schwenklagereinheit auf, in welcher der Schwenklagerkörper durch eine Schwenkbewegung um eine Schwenkachse zwischen der Betriebsposition und der Parkposition verschwenkbar aufgenommen ist. Des Weiteren umfasst die Anhängekupplung eine durch einen Antrieb antreibbare Drehblockiereinrichtung. Gemäß dem damaligen Entwicklungstand war vorgesehen, dass die Drehblockiereinrichtung mindestens einen Drehblockierkörper aufweist, der in einer Führungsrichtung mit mindestens einer Komponente in radialer Richtung zur Schwenkachse bewegbar ist. Außerdem ist der Drehblockierkörper durch Bewegung in der Führungsrichtung mit einer Aufnahme in Eingriff und außer Eingriff bringbar. Des Weiteren ist ein bewegbarer Betätigungskörper vorgesehen, der eine quer zur Führungsrichtung verlaufende Druckfläche aufweist. Mittels Bewegung des Betätigungskörpers in der Betätigungsrichtung ist der mindestens eine Drehblockierkörper in der Führungsrichtung bewegbar und beaufschlagbar. Weiterhin ist vorgesehen, dass der Antrieb in Form eines Stellantriebes ausgestaltet ist, mit dem der Betätigungskörper in der Betätigungsrichtung zwischen mindestens einer Drehblockierstellung und einer Freilaufstellung bewegbar ist.

Darüber hinaus ist aus der EP 1 084 871 B1 eine Anhängevorrichtung bekannt, bei der die Schwenklagereinheit über ein Kulissengetriebe mit dem Schwenklagerkörper zusammenwirkt. Eine Kulissenbahn besitzt dabei eine ungefähre Y-Form. Ein unterer freier Ast des Y dient als ein Umkehrabschnitt, in dem der Schwenklagerkörper und die damit verbundene Kugelstange ihren Tiefpunkt während der Überführung von der Betriebs- in die Parkposition (und umgekehrt) einnimmt. Ein relativ zu der Kulissenbahn bewegbarer Kulissenstein muss, ausgehend von dem Umkehrabschnitt, bei der Bewegung in die Parkposition in den einen oberen Ast des Y einfahren, bei der Bewegung in die Betriebsposition in die den anderen oberen Ast. Um diese beiden Wege einschlagen zu können, befindet sich an der durch das Y gebildeten Verzweigung eine schaltbare Weiche, die eine zwischen zwei Stellungen bewegbare Zunge als Leitelement für den Kulissenstein aufweist. Daher ist der Bauaufwand für die bekannte Anhängevorrichtung groß, weil ein gesonderter Weichenantrieb erforderlich ist. Das Dokument WO 2006/06478 A1 offenbart ebenfalls eine gattungsgemäße Anhängevorrichtung.

Nachteilig bei dem vorgenannten Stand der Technik ist, dass die Kugelstange üblicherweise verhältnismäßig kurz ist, um unter dem Fahrzeug hervor geschwenkt werden zu können. Dies gilt insbesondere für Anhängevorrichtungen mit nur einer Achse. Dadurch wird üblicherweise eine geringe Bodenfreiheit beim Ausschwenken verursacht, was mit entsprechend großen Ausschnitten für die Kugelstange kompensiert wird.

### Aufgabe

Es ist Aufgabe der vorliegenden Erfindung, die Nachteil des Stands der Technik zu beseitigen und eine Anhängevorrichtung bereitzustellen, die einerseits besonders sicher und zuverlässig betreibbar und andererseits zeit- und somit kosteneffizient herstellbar ist.

### Lösung

Die Aufgabe wird durch eine Anhängevorrichtung zur Anbringung an einem Heck eines Fahrzeugs gemäß dem Anspruch 1 gelöst. Vorteilhafte Ausgestaltungen sind Gegenstand der Unteransprüche.

Erfindungsgemäß ist vorgesehen, dass der Kulissenstein zumindest mit einer Komponente seiner Bewegungsrichtung, vorzugsweise genau bzw. ausschließlich, in eine Richtung senkrecht zu der ersten Schwenkachse, das heißt radial zu dieser, bewegbar ist. Diese Beweglichkeit erlaubt es, dass der Kulissenstein mit unterschiedlich tiefen Kulissenbahnen, insbesondere nutförmigen Kulissenbahnen, zusammenwirken kann. Dies ermöglicht zum Beispiel die Ausbildung Rampenförmiger Bahnabschnitte, die der Kulissenstein quasi hinauffahren kann, um erforderlichenfalls die Kulissenbahn gänzlich verlassen zu können. Andersherum gestattet die radiale Beweglichkeit des Kulissensteins aber auch ein Wiedereintauchen des Kulissenstein in die Kulissenbahn, insbesonder Nut, wenn sich der Kulissenstein von einem Bereich mit geringerer Tiefe in einen Bereich mit größerer Tiefe bewegen soll. Im Ergebnis wird durch die radiale Beweglichkeit des Kulissensteins die Realisierung von unterschiedlichen Hin- und Rückwegen bei der Überführung der Kugelstange von der Betreibs- in die Parkposition und umgekehrt möglich, was in dieser Anmeldung mit dem Begriff "Hysterese" umschrieben werden soll.

Um nun die Anhängevorrichtung zwischen der Parkposition und der Betriebsposition zu verschwenken, wird zumindest im Wesentlichen die Kugelstange verschwenkt. Die Kugelstange ist hierbei in der Betriebsposition zumindest im Wesentlichen senkrecht zu dem Fahrzeugteil, an dem sie befestigt ist, beispielsweise dem Querträger, d. h. im Wesentlichen parallel zu einer Fahrzeuglängsachse, angeordnet. Mit anderen Worten steht die Kugelstange in der Betriebsposition derart nach hinten über, dass das Zusatzgerät, beispielsweise der Anhänger oder ein Fahrradträger, eingekuppelt werden kann. Demgegenüber ist die Kugelstange in der Parkposition zumindest im Wesentlichen parallel zu dem Fahrzeugteil, an dem sie befestigt ist, d. h. senkrecht zu der Fahrzeuglängsachse, angeordnet. Mit anderen Worten ist zumindest die Kugelstange in der Parkposition nicht für das Zusatzgerät erreichbar und weiterhin beispielsweise hinter einem Stoßfänger angeordnet beziehungsweise gewissermaßen verstaut, meist für einen hinter dem Fahrzeug stehenden Betrachter unsichtbar.

Die Kupplungskugel muss für einen Wechsel zwischen der Parkposition und der Betriebsposition folglich derart verschwenkt werden können, dass sie gewissermaßen unter beispielsweise dem Stoßfänger abtauchen kann. Mit anderen Worten muss zumindest die Kugelstange so weit absenkbar beziehungsweise verschwenkbar sein, dass sie derart zumindest im Wesentlichen vollständig unter den Stoßfänger "abtaucht", um anschließend von der Parkposition in die Betriebsposition beziehungsweise umgekehrt verschwenkt werden zu können.

Dies wird mittels der Schwenklagereinheit bewerkstelligt, die um die vertikal verlaufende erste Schwenkachse verschwenkbar ist. Mit anderen Worten wird durch die Schwenklagereinheit eine rotatorische Schwenkbewegung um die erste Schwenkachse möglich, mithin zumindest im Wesentlichen eine Verschwenkung "nach links" beziehungsweise "nach rechts", betrachtet in Fahrzeuglängsrichtung. Wieder mit anderen Worten wird mittels der Schwenklagereinheit eine Verschwenkung der Kugelstange möglich.

Ein Verschwenken der Kugelstange in vertikale Richtung wird mittels des Schwenklagerkörpers bewerkstelligt, der die zweite Schwenkachse definiert, welche zumindest im Wesentlichen horizontal verläuft. Mit anderen Worten wird durch den Schwenklagerkörper eine rotatorische Schwenkbewegung um die zweite Schwenkachse möglich, mithin zumindest im Wesentlichen eine Verschwenkung "nach oben" beziehungsweise "nach unten", betrachtet beispielsweise in Relation zu einem Untergrund, auf dem das Fahrzeug angeordnet ist. Wieder mit anderen Worten kann die Anhängevorrichtung, insbesondere die Kugelstange, mittels des Schwenklagerkörpers angehoben beziehungsweise abgesenkt werden.

Bereits basierend auf einer Zusammenschau der vorgenannten Schwenklagereinheit und des Schwenklagerkörpers ist erkennbar, dass ein Betrieb der Anhängevorrichtung zumindest im Wesentlichen auf einem Zusammenspiel dieser beiden Komponenten basiert. Mit anderen Worten wird ein Wechsel zwischen der Parkposition und der Betriebsposition zumindest im Wesentlichen dadurch erreicht, dass die Kugelstange einerseits höhenmäßig und andererseits seitwärts bewegbar ist. Für einen Wechsel aus der Parkposition muss die Kupplungskugel beispielsweise absenkbar sein, um unter dem Stoßfänger abtauchen zu können, anschließend verschwenkbar sein, um von der Parkposition zumindest im Wesentlichen 90° in die Betriebsposition verschwenkbar zu sein, und abschließend anhebbar sein, um die Kugelstange wieder auf eine Betriebsposition anzuheben.

Angetrieben wird die Anhängevorrichtung mittels der Antriebseinrichtung. Mit anderen Worten bewerkstelligt die Antriebseinrichtung zumindest mittelbar eine Überführung von der Parkposition in die Betriebsposition beziehungsweise umgekehrt.

Mittels der Kulissenführung wird die vorgenannte beschriebene Bewegungskombination aus translatorischer Bewegung in vertikale Richtung und rotatorische Bewegung um die erste Schwenkachse bewerkstelligt, wobei beide Bewegungsarten sowohl überlagert, d.h. gleichzeitig, oder aber zeitlich entkoppelt, d.h. getrennt und hintereinander folgend, ablaufen können. Mit anderen Worten ist die Kulissenführung derart ausgestaltet, dass die Kugelstange einerseits in vertikaler Richtung absenkbar beziehungsweise anhebbar ist und andererseits - möglicherweise zumindest phasenweise gleichzeitig - seitlich verschwenkbar ist. Hierbei wird eine funktionelle, zwangsgekoppelte Einheit zumindest mittelbar mittels des Kulissensteins hergestellt, welcher die Kulissenführung mit der Schwenklagereinheit oder dem Schwenklagerkörper verbindet. Dazu ist der Kulissenstein derart in der Kulissenbahn und der Schwenklagereinheit oder dem Schwenklagerkörper eingesetzt, dass diese miteinander wirkverbunden sind. Mit anderen Worten bewirkt der Kulissenstein, dass sich die Schwenklagereinheit oder der Schwenklagerkörper ausschließlich derart bewegt werden kann, wie es die Kulissenbahn vorgibt, zumindest solange, wie sich der Kulissenstein in der Kulissenbahn befindet.

Um die Anhängevorrichtung in der Parkposition beziehungsweise der Betriebsposition zu halten, ist zumindest die eine Blockiereinrichtung vorgesehen. In diesem Zusammenhang kann die Blockiereinrichtung beispielsweise einen Blockierkörper umfassen, welcher dergestalt beispielsweise mit dem Schwenklagerkörper und der Schwenklagereinheit zusammenwirkt, dass zumindest temporär eine relative Bewegung zwischen diesen verhindert werden kann. Hierzu kann beispielsweise in der Schwenklagereinheit eine Aussparung vorgesehen sein, in welche der Blockierkörper zumindest teilweise eingreift. Mit anderen Worten wird der Blockierkörper beispielsweise von beziehungsweise in dem Schwenklagerkörper geführt und kommt derart mit der Aussparung in Eingriff, dass bei Erreichen der Parkposition beziehungsweise der Betriebsposition eine relative Bewegung zwischen Schwenklagereinheit und Schwenklagerkörper verhindert wird. Wieder mit anderen Worten sind die Schwenklagereinheit und der Schwenklagerkörper relativ zueinander blockiert. Demzufolge ist die Kugelstange in der jeweiligen Parkposition beziehungsweise Betriebsposition festgestellt, mithin vor unerwünschter Bewegung gesichert.

Die Kulissenbahn muss daher dergestalt ausgebildet sein, dass sowohl der vertikale (translatorische) Anteil der Bewegung - mithin das Absenken beziehungsweise Anheben - als auch der seitliche (rotatorische) Anteil der Bewegung - mithin das Verschwenken nach links beziehungsweise nach rechts - realisiert werden kann. Dies wird mittels der erfindungsgemäßen Ausgestaltung bewerkstelligt.

Die Bewegung des Kulissensteins in der Kulissenbahn ist besonders einfach in Zusammenhang mit dem Verschwenken der Kugelstange zu verstehen. Um die Kugelstange und somit die Anhängevorrichtung von der Parkposition in die Betriebsposition zu überbringen und umgekehrt, muss die Kugelstange eingangs derart abgesenkt werden, dass diese überhaupt erst verschwenkt werden kann. Dieser zumindest im Wesentlichen ausschließlich vertikale Anteil der Bewegung muss durch eine entsprechende Bewegung des Kulissensteins in der (d. h. zumindest relativ zu der) Kulissenbahn möglich sein. Mit anderen Worten wird dadurch, dass der Kulissenstein vertikal in der und entlang der Kulissenbahn bewegbar ist, die zumindest im Wesentlichen vertikale Bewegung der Kugelstange, nämlich deren Absenken beziehungsweise Anheben relativ zu der Stoßstange, möglich. Es versteht sich, dass aufgrund der Anordnung des Kulissensteins an und seiner festen Verbindung mit z.B. der fahrzeugfesten Schwenklagereinheit lediglich eine Relativbewegung zwischen Kulissenstein und Kulissenbahn stattfindet, wobei der Schwenklagerkörper dasjenige Bauteil ist, das relativ zum Fahrzeug bewegt wird.

Da die Kugelstange für einen Wechsel zwischen Parkposition und Betriebsposition immer abgesenkt und anschließend angehoben werden muss, gibt es folglich mindestens einen Umkehrpunkt oder Umkehrabschnitt, in dem die vertikale Bewegungsrichtung umgekehrt wird. Mit anderen Worten muss in diesem Umkehrpunkt die Antriebseinrichtung zwischen Anheben und Absenken und umgekehrt umschalten oder aber es muss ein Umkehrmechanismus existieren, der ohne Umkehrung beispielsweise der Drehrichtung eines Antriebsmotors einen Wechsel von einer Abwärts- in eine Aufwärtsbewegung (und umgekehrt) bewirkt.

In einer Ausführungsform kann der Umkehrabschnitt der Kulissenbahn, der eine Stufe aufweist, den Kulissenstein gewissermaßen in den designierten "Zweig" der Kulissenbahn führen. Mit anderen Worten kann der Kulissenstein gerade im Umkehrpunkt, also wenn die Antriebseinrichtung die Drehrichtung ändert, durch die Stufe derart in den "richtigen" Zweig der Kulissenbahn gelenkt werden, dass ein Verschwenken von der Parkposition in die Betriebsposition und umgekehrt erst möglich wird. Ohne die Stufe wäre in diesem Fall nur die Überführung der Kugelstange von der Parkposition in die Betriebsposition (oder umgekehrt), aber nicht wieder rückwärts möglich, da der Kulissenstein im Umkehrbereich "gefangen" wäre und nicht mit der "passenden" Seitenwand der Kulissenbahn in Kraft übertragenden Kontakt gelangen könnte. Die erfindungsgemäß mögliche Stufe schafft bei dieser Variante in der Kulissenbahn eine "künstliche" Seitenwand in einer weiteren Ebene, die der Kulissenstein durch seine Beweglichkeit senkrecht zur ersten Schwenkachse erreichen kann.

Gemäß einer besonders bevorzugten Ausführungsform ist vorgesehen, dass der Kulissenstein in Richtung auf die erste Schwenkachse hin oder von dieser weg elastisch vorgespannt ist, insbesondere mittels eines metallischen Federelements (z.B. Schraubenfeder), das sich vorzugsweise in der Schwenklagereinheit oder dem Schwenklagerkörper abstützt. Der Kulissenstein wird dann durch die Kraft der Antriebseinrichtung bei sich verringernder Bahntiefe gegen die Kraft des Federelements radial nach außen gedrückt, kann aber zu einem späteren Zeitpunkt durch die Federvorspannung automatisch wieder in eine weiter ausgefahrene Stellung zurückkehren, sobald die Bahntiefe das erlaubt, d.h. wieder zunimmt. Dasselbe gilt für ein vollständiges Verlassen der Bahn und späteres Wiedereintreten.

Gemäß einer Ausgestaltung ist vorgesehen, dass die Kulissenbahn im Bereich der Stufe eine solche quer zu der Bahnrichtung gemessene Breite aufweist, dass die Stufe bei der Überführung der Kugelstange von der Parkposition in die Betriebsposition oder umgekehrt, umfahrbar ist, und zwar ohne Höhensprung, wobei vorzugsweise der Kulissenstein während der Umfahrung der Stufe mit einer der Stufe abgewandten Wandung der Kulissenbahn in kraftübertragendem Kontakt steht. Hierdurch wird in eine Bewegungsrichtung eine Umfahrung der Stufe möglich, wobei die "lenkende" Funktion der Kulissenbahn in beiden Zweigen von der der Stufe abgewandten Seitenwand der Kulissenbahn erfüllt wird. Bei der umgekehrten Bewegungsrichtung liegt ein kraftübertragender Kontakt mit der vorgenannten Seitenwand nicht vor, sondern der Kulissenstein wirkt im ersten Zweig bis zum Umkehrabschnitt mit der gegenüberliegenden, anderen Seitenwand zusammen und wird dann durch die Stufe auch im zweiten Zweig an die andere Seitenwand geleitet.

In einer weiteren Ausgestaltung ist vorgesehen, dass - in Bahnrichtung betrachtet - ausgehend von einer Tiefstelle eine Tiefe der Kulissenbahn in einem Neigungsabschnitt jeweils in einem Teil der Breite der Kulissenbahn bis zu der Stufe zunimmt, wobei vorzugsweise eine Tiefe hinter der Stufe einer Tiefe an oder vor der Tiefstelle entspricht. Alternativ oder zusätzlich kann vorgesehen sein, dass ausgehend von einer Hochstelle eine Tiefe der Kulissenbahn in einem Neigungsabschnitt bis zu der Stufe abnimmt, wobei vorzugsweise eine Tiefe hinter der Stufe einer Tiefe an oder vor der Tiefstelle entspricht. Hierdurch kann der Kulissenstein im Umkehrabschnitt besonders einfach in die Tiefstelle eingeführt werden.

Gemäß einer weiteren Ausgestaltung der Erfindung ist vorgesehen, dass in dem Neigungsabschnitt der Kulissenbahn neben einer Absenkspur, in der sich die Tiefe der Kulissenbahn bis zu der Stufe vergrößert, jeweils eine Umfahrungsspur angeordnet ist, und/oder in dem Neigungsabschnitt, der Kulissenbahn neben der Anstiegspur, in der sich die Tiefe der Kulissenbahn bis zu der Stufe reduziert, eine Umfahrungsspur angeordnet ist.

Die Erfindung weiter ausgestaltend ist vorgesehen, dass die Kulissenbahn eine Nut in dem vorzugsweise zylindrisch ausgebildeten Schwenklagerkörper oder der vorzugsweise hülsenförmig ausgebildeten Schwenklagereinheit und der Kulissenstein ein mit der Schwenklagereinheit verbundener, vorzugsweise über deren innere Mantelfläche radial vorstehender, oder mit dem Schwenklagerkörper verbundener, vorzugsweise über dessen äußerer Mantelfläche radial vorstehender, und jeweils in die Nut eingreifender Stift ist, wobei vorzugsweise eine die Schwenklagereinheit bildende Hülse und ein den Schwenklagerkörper bildender und innerhalb der Hülse angeordneter Zylinderkörper koaxial zueinander ausgerichtet sind. Die in Form einer Nut ausgestaltete Kulissenbahn lässt sich mit herkömmlichen Fertigungsverfahren, z. B. mittels entsprechender Fräswerkzeuge, besonders einfach herstellen. Die ineinandergreifenden Zylindergeometrien sind ebenfalls einfach herstellbar und bieten eine hervorragende Führungs- und Lagerungsfunktion.

Ein weiterer Vorteil ergibt sich dann, wenn ein Durchmesser oder eine Breite des Stifts kleiner ist als eine quer zu der Bahnrichtung gemessene Breite der Kulissenbahn in der Absenkspur oder der Umfahrungsspur. Mit anderen Worten ist der Stift derart dimensioniert, dass er mit einem gewissen Spiel in der Kulissenbahn bewegt werden kann.

Ein weiterer Vorteil ergibt sich dann, wenn die Umfahrungsspur seitlich neben der Stufe angeordnet ist. Mit anderen Worten ist die Umfahrungsspur derart gewissermaßen versetzt, mithin neben, der Stufe angeordnet, dass der Stift diese passieren kann. Mit anderen Worten ermöglicht die Umfahrungsspur es, die Stufe nicht zu nehmen, sondern diese zu umfahren. Hierdurch ergibt sich der Vorteil, dass die Anhängevorrichtung besonders bedarfsgerecht betrieben werden kann.

In einer weiteren Ausgestaltung der Erfindung ist vorgesehen, dass die Umfahrungsspur in einem Bereich der Stufe zumindest im Wesentlichen ein Niveau der Hochstelle aufweist. Gemäß dieser Ausgestaltung besteht somit zumindest im Wesentlichen im Bereich der Stufe kein Höhenunterschied zwischen der Hochstelle und der Stufe. Durch diese Ausgestaltung ist es dem Stift nicht möglich, in die Stufe einzugreifen. Mit anderen Worten kann der Stift die Stufe nicht nehmen, da sich diese zumindest im Wesentlichen höhenmäßig von ihrer Umgebung, insbesondere der Hochstelle, nicht abhebt. Hierdurch ergibt sich der Vorteil, dass die Stufe besonders zuverlässig nur dann genommen wird, wenn dies erwünscht ist. Vorteilhafterweise lässt sich somit ein besonders fehlerfreier Betrieb der Anhängevorrichtung bewerkstelligen.

Gemäß einer weiteren Ausgestaltung ist vorgesehen, dass der Stift zumindest auf einer Seite zylindrisch und die Stufe halbzylindrisch ausgebildet sind, wobei eine Achse des Stifts und eine Achse eines von der Stufe gebildeten Halbzylinders im Moment des Absenkens des Stifts an der Stufe koaxial zueinander ausgerichtet sind und Mantelflächen des Stifts einerseits und der Stufe andererseits sich in einer Umkehrposition aneinander anschmiegen. Mit anderen Worten sind der Stift und die als Halbzylinder ausgestaltete Stufe korrespondierend ausgestaltet. Hierdurch ergibt sich der Vorteil, dass der Stift besonders einfach in die Stufe hinabgleitet. Weiterhin ergibt sich vorteilhafterweise ein besonders verschleißarmer Betrieb, da durch die korrespondierenden Formen ein Abrieb beziehungsweise eine Abnutzung, beispielsweise durch Abrasion verhindert wird.

Ein weiterer Vorteil ergibt sich dann, wenn eine Wandung der Absenkspur oder der Stufenspur der Kulissenbahn tangential in eine Mantelfläche des die Stufe bildeten Halbzylinders übergeht. Mit anderen Worten ist möglichst stufenlosen Übergang innerhalb der Kulissenbahn möglich. Der Kulissenstein kann durch die Stufe aufgenommen werden und wird sodann mittels der tangential anschließenden Kulissenbahn weitergeführt. Demzufolge ist der Kulissenstein ständig sicher in der Kulissenbahn geführt. Insbesondere kann hierdurch verhindert werden, dass der Kulissenstein beispielsweise in der Kulissenbahn blockiert oder aus dieser ausbricht.

Vorteilhafterweise ist in einer weiteren Ausgestaltung vorgesehen, dass der Kulissenstein mittels eines Federelements, vorzugsweise mittels einer Schraubenfeder, in eine Richtung auf einen Grund der Kulissenbahn zu oder in eine Richtung von der Schwenklagereinheit oder dem Schwenklagerkörper weg vorgespannt ist. Hierdurch wird der Kulissenstein bei Überfahren der Stufe sozusagen in seine designierte Position gedrückt. Vorteilhafterweise ergibt sich somit eine besonders genaue und sichere Führung des Kulissensteins.

Gemäß einer weiteren Ausgestaltung ist vorgesehen, dass die Kulissenbahn in einer Abwicklung der inneren Mantelfläche der Schwenklagereinheit oder der äußeren Mantelfläche des Schwenklagerkörpers V-förmig oder U-förmig oder C-förmig ist, wobei sich vorzugsweise in einer Extremstelle des V oder U oder C der Umkehrbereich befindet. In der Praxis hat sich gezeigt, dass derartige Formen besonders gut für die Führung des Kulissensteins und die Realisierung der erforderlichen Bewegungslinie des Kugelkopfs geeignet sind. Hierdurch ergibt sich der Vorteil, dass der Kulissenstein besonders leichtgängig und bedarfsgerecht geführt werden kann.

Ein weiterer Vorteil ergibt sich dann, wenn die Kulissenbahn eine äußere Führungsfläche und eine innere Führungsfläche, vorzugsweise jeweils in Form einer Seitenwand einer die Kulissenbahn bildenden Nut, aufweist, wobei die Stufe zwischen einer Extremstelle der inneren Führungsfläche und einer Extremstelle der äußeren Führungsfläche angeordnet ist. Durch die Führungsflächen erhält der Kulissenstein eine zusätzliche beidseitige Führung.

Außerdem kann es besonders vorteilhaft sein, wenn eine von dem Kulissenstein auf einem Kulissenkörper beschriebene erste Bahnkurve, die eine Überführung der Kugelstange von der der Betriebsposition in die Parkposition beschreibt, zumindest abschnittsweise von einer zweiten Bahnkurve abweicht, die eine Überführung der Kugelstange von der Parkposition in die Betriebsposition beschreibt, wobei der Kulissenkörper der Schwenklagerkörper ist, falls der Kulissenstein in oder an der Schwenklagereinheit angeordnet ist, oder die Schwenklagereinheit ist, falls der Kulissenstein in oder an dem Schwenklagerkörper angeordnet ist.

Die Erfindung weiter ausgestaltend wird schließlich noch vorgeschlagen, dass sich der Schwenklagerkörper bei der Überführung von der Betriebsposition in die Parkposition und/oder umgekehrt zumindest zeitweise überlagert sowohl translatorisch in vertikale Richtung als auch rotatorisch um die erste Schwenkachse bewegt.

### Ausführungsbeispiele

Die Erfindung ist nachstehend anhand zweier Ausführungsbeispiels, die in den Figuren dargestellt sind, näher erläutert. Es zeigt:
- Fig. 1:: eine schematische Ansicht einer erfindungsgemäßen Anhängevorrichtung, montiert an einem Fahrzeug und in einer Betriebsposition;
- Fig. 2:: wie Figur 1, aber in einer Parkposition;
- Fig. 3:: eine schematische Schnittansicht von der Seite, gemäß Figur 1;
- Fig. 4:: eine schematische Schnittansicht von der Seite, hier in einer Zwischenposition;
- Fig. 5:: eine schematische Schnittansicht von der Seite, gemäß Figur 2;
- Fig. 6:: eine schematische Detailansicht der Anhängevorrichtung;
- Fig. 7:: eine schematische Ansicht eines Schwenklagerkörpers;

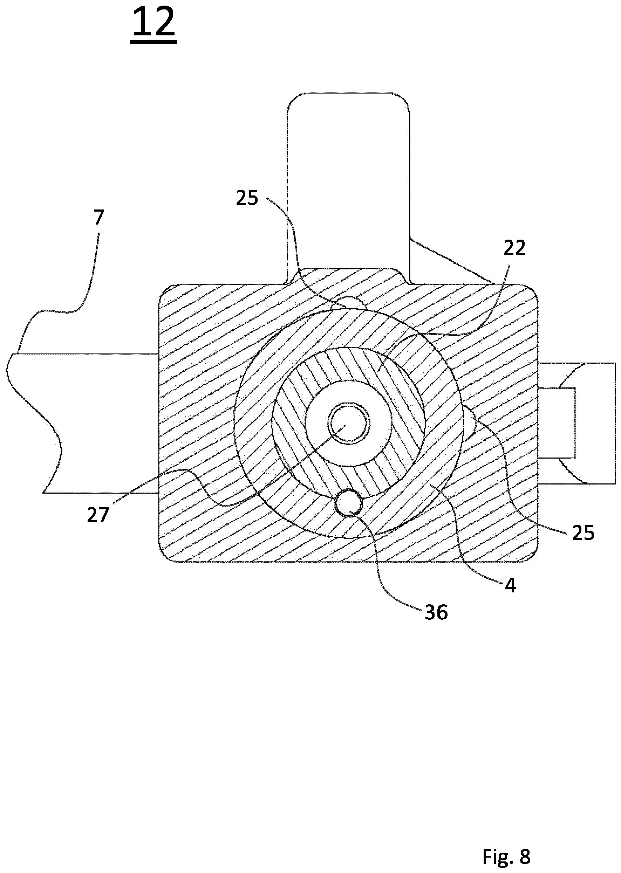

- Fig. 8:: eine schematische Schnittansicht von oben auf eine Schwenklagereinheit gemäß einer ersten Schnittebene;
- Fig. 9:: eine schematische Übersicht verschiedener Zustände des Schwenklagerkörpers während eines Betriebes der Anhängevorrichtung;
- Fig. 10:: eine schematische Schnittansicht von oben auf die Schwenklagereinheit, gemäß einer zweiten Schnittebene;
- Fig. 11:: eine schematische Ansicht einer Nut einer Kulissenbahn;
- Fig. 12:: eine schematische Ansicht der erfindungsgemäßen Anhängevorrichtung, montiert an dem Fahrzeug und in der Betriebsposition gemäß einer weiteren Ausgestaltung;
- Fig. 13:: wie Figur 12, aber in der Parkposition;
- Fig. 14:: eine schematische Schnittansicht von der Seite, gemäß Figur 12;
- Fig. 15:: wie Figur 14, aber in einer Zwischenposition;
- Fig. 16:: eine schematische Schnittansicht von der Seite, gemäß Figur 13;
- Fig. 17:: wie Figur 16, aber in der Zwischenposition;
- Fig. 18:: eine schematische Ansicht der Schwenklagerkörpers in zwei verschiedenen Zwischenpositionen;

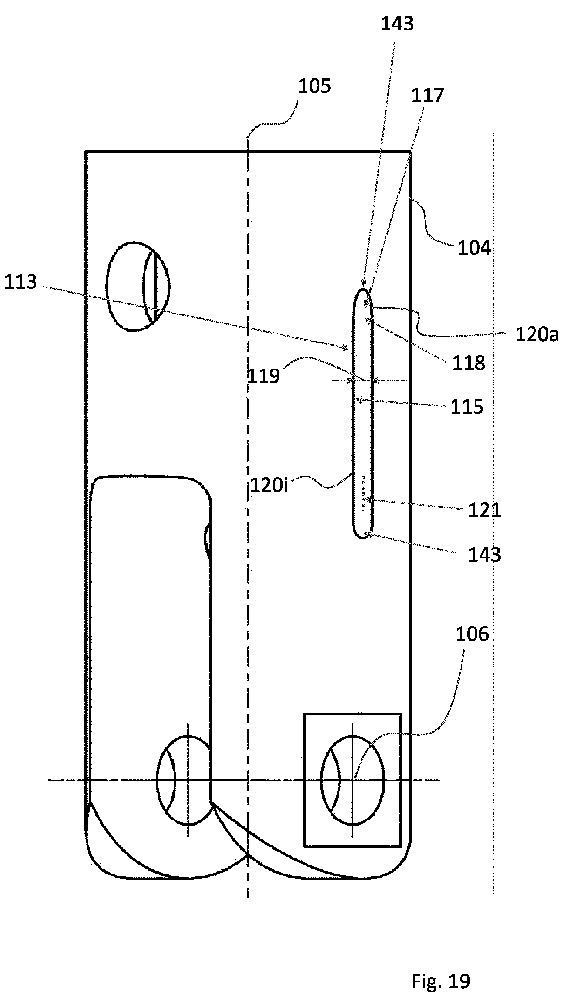

- Fig. 19:: eine perspektivische Ansicht des Schwenklagerkörpers;
- Fig. 20:: eine schematische Schnittansicht der Schwenklagereinheit von oben;
- Fig. 21:: eine isometrische Ansicht der Schwenklagereinheit und
- Fig. 22:: eine schematische Ansicht der Nut der Kulissenbahn.

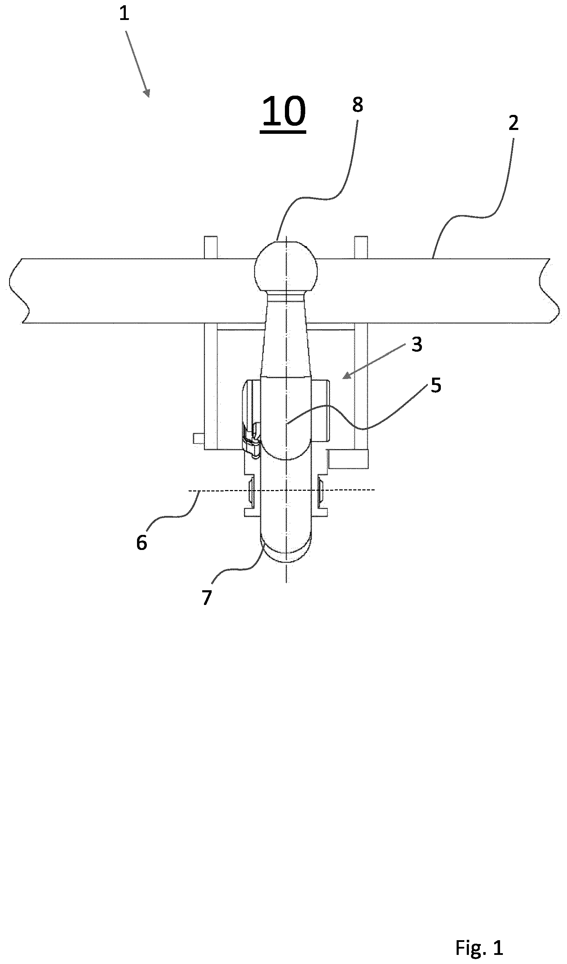

Figur 1 zeigt in einer schematischen Ansicht eine erfindungsgemäße Anhängevorrichtung 1, wobei diese zumindest mittelbar an einem Fahrzeugteil 2 eines Fahrzeugs montiert ist und sich in einer Betriebsposition 10 befindet. Bei dem Fahrzeugteil 2 handelt es sich vorliegend um einen hinteren Querträger des Fahrzeugs. Der Querträger kann entweder bereits baulich, das heißt von Werk aus, als Teil des Fahrzeugs, insbesondere dessen Karosserie, oder als Teil eines Lieferumfangs der Anhängevorrichtung vorgesehen sein. Die Schwenklagereinheit 3 ist vorliegend beispielsweise mittels einer Schraubenverbindung an einem Halteblech befestigt, welches wiederum mit dem einfach auch als Querträger bezeichneten Fahrzeugteil 2 verschweißt ist. Der Querträger 2 ist wiederum mit dem Fahrzeug, insbesondere dessen Karosserie, verbunden. Mit anderen Worten ist die Anhängevorrichtung 1 in Figur 1 zumindest im Wesentlichen gemäß ihrem vollständig hergestellten Zustand dargestellt.

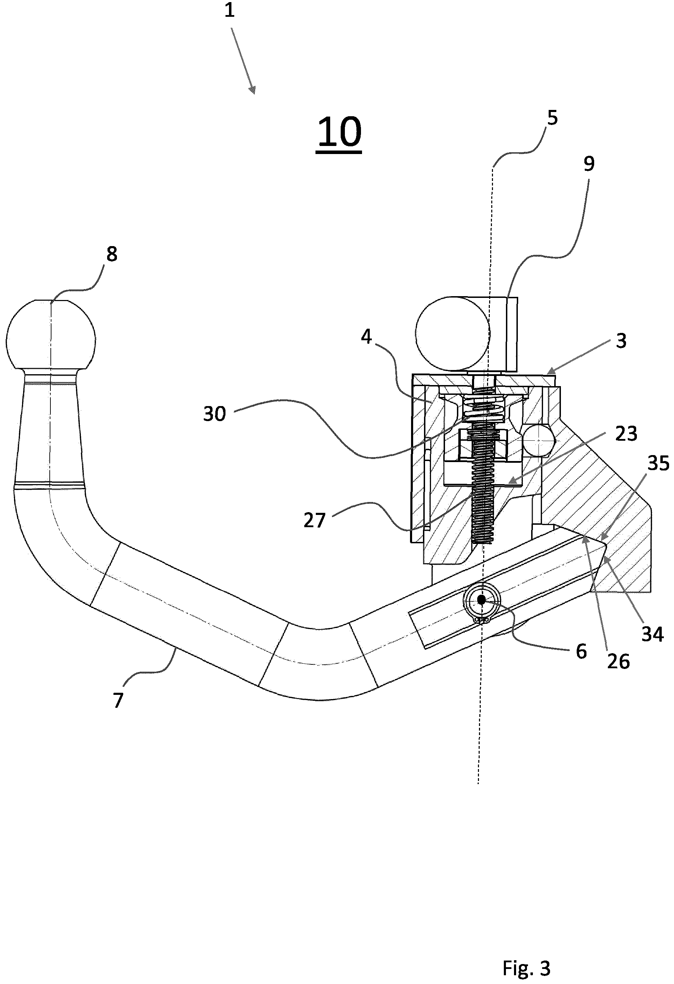

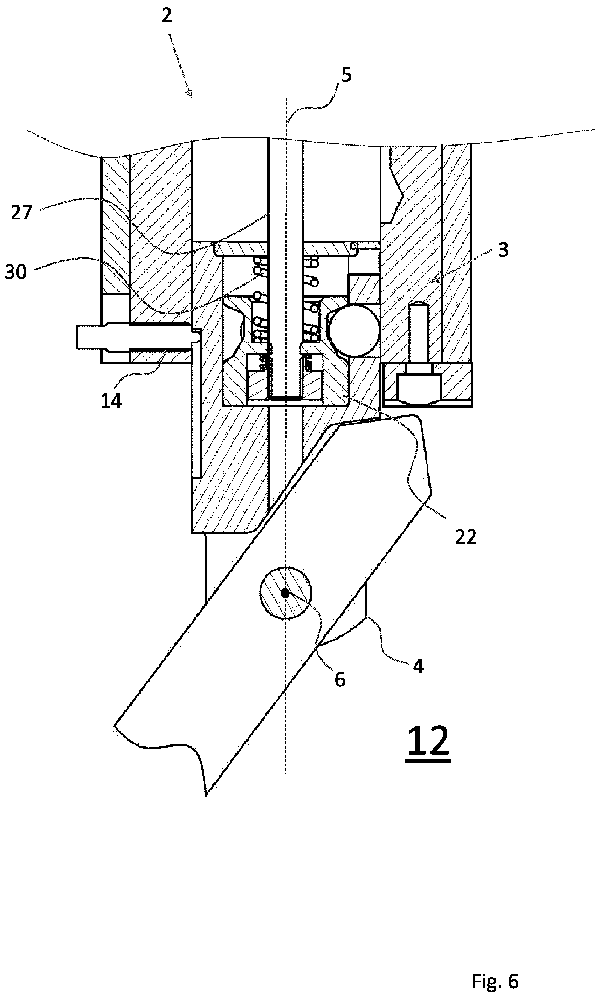

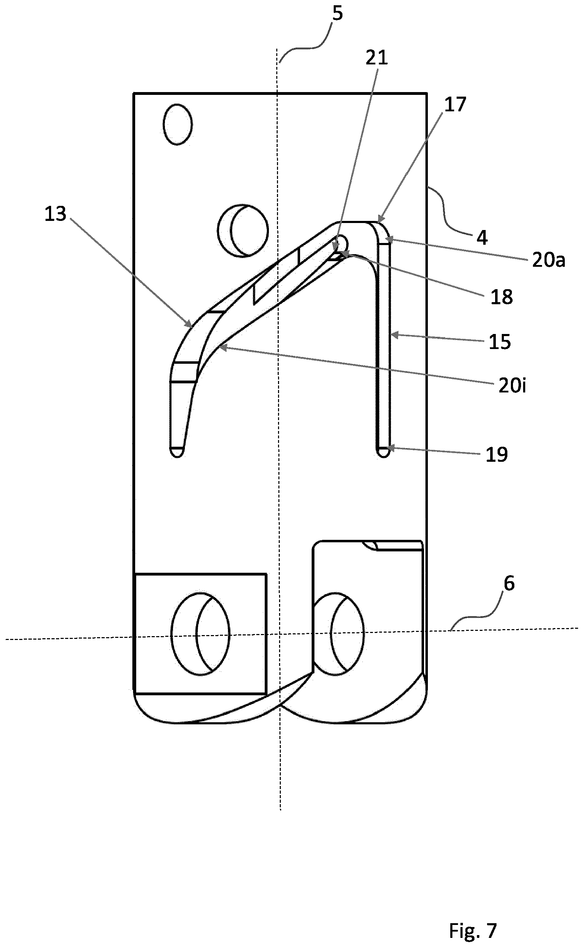

Die Anhängevorrichtung 1 umfasst eine Schwenklagereinheit 3, die in Kraft übertragender Weise mit dem Fahrzeugteil 2 verbunden ist. Die Schwenklagereinheit 3 weist eine vertikal verlaufende erste Schwenkachse 5 auf, wie beispielsweise in Figur 1 dargestellt ist. Außerdem umfasst die Anhängevorrichtung einen Schwenklagerkörper 4. Dieser ist, wie die Figuren 3 bis 6 besonders deutlich zeigen, in beziehungsweise an der Schwenklagereinheit 3 gelagert. Hierbei wird durch den Schwenklagerkörper 4 eine zweite Schwenkachse 6 definiert, die zumindest im Wesentlichen horizontal verläuft. Diese zweite Schwenkachse 6 ist beispielsweise in den Figuren 6 und 7 dargestellt. Insbesondere Figur 7 zeigt besonders deutlich, dass die erste Schwenkachse 5 und die zweite Schwenkachse 6 senkrecht zueinander stehen.

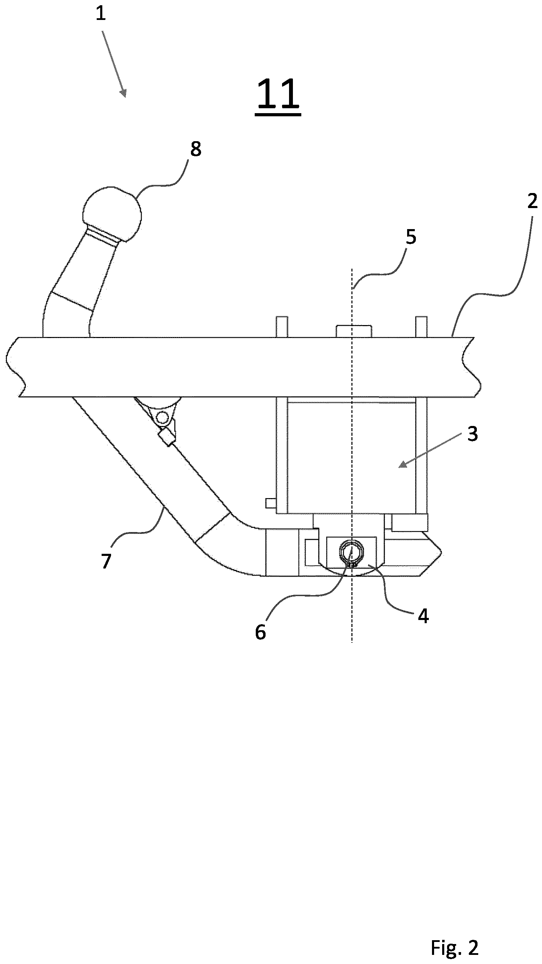

Die Anhängevorrichtung 1 umfasst außerdem eine Kugelstange 7, die an einem Ende eine Kupplungskugel 8 aufweist. Dies ist beispielsweise den Figuren 2 bis 4 zu entnehmen. Mittels der Kupplungskugel 8 kann ein Zusatzgerät, beispielsweise ein Anhänger oder ein Fahrradträger, an das Fahrzeug angekuppelt werden. Dazu wird beispielsweise ein mit der Kupplungskugel 8 korrespondierendes Kupplungsstück des Zusatzgeräts auf den Kugelkopf 8 aufgesetzt. Mit anderen Worten kann das Zusatzgerät durch Einhängen an beziehungsweise auf die Kupplungskugel 8 zumindest mittelbar mit dem Fahrzeug verbunden werden.

Die Kupplungsstange 7 ist schwenkbar und gelenkig mit dem Schwenklagerkörper 4 verbunden. Mit anderen Worten kann die Kugelstange 7 derart um die zweite Schwenkachse 6 verschwenkt werden, dass verschiedene Positionen erreichbar sind, wie beispielsweise in Zusammenschau der Figuren 3 bis 5 deutlich wird.

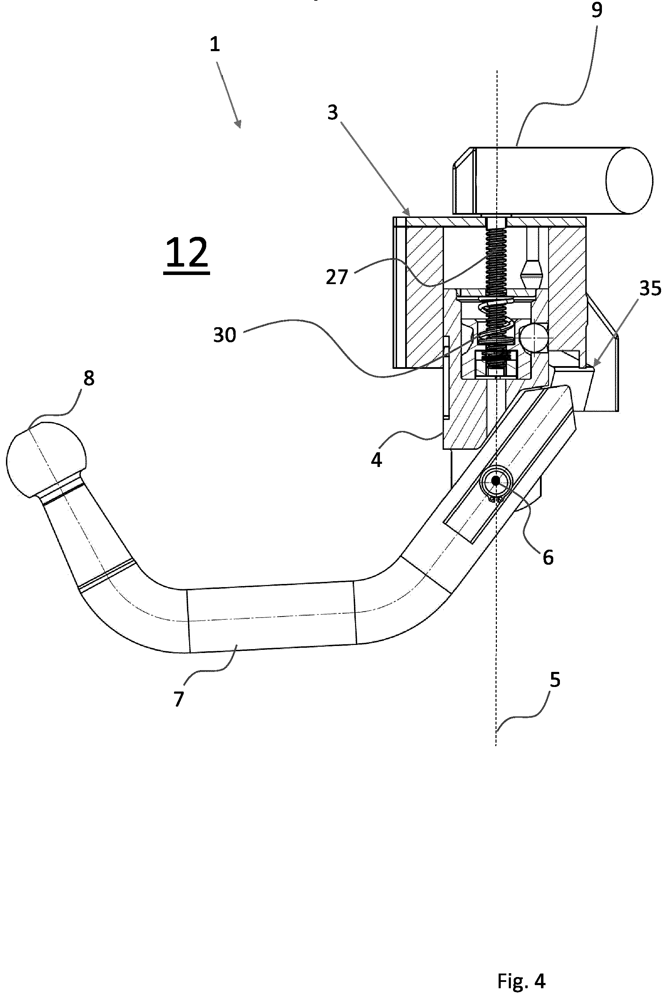

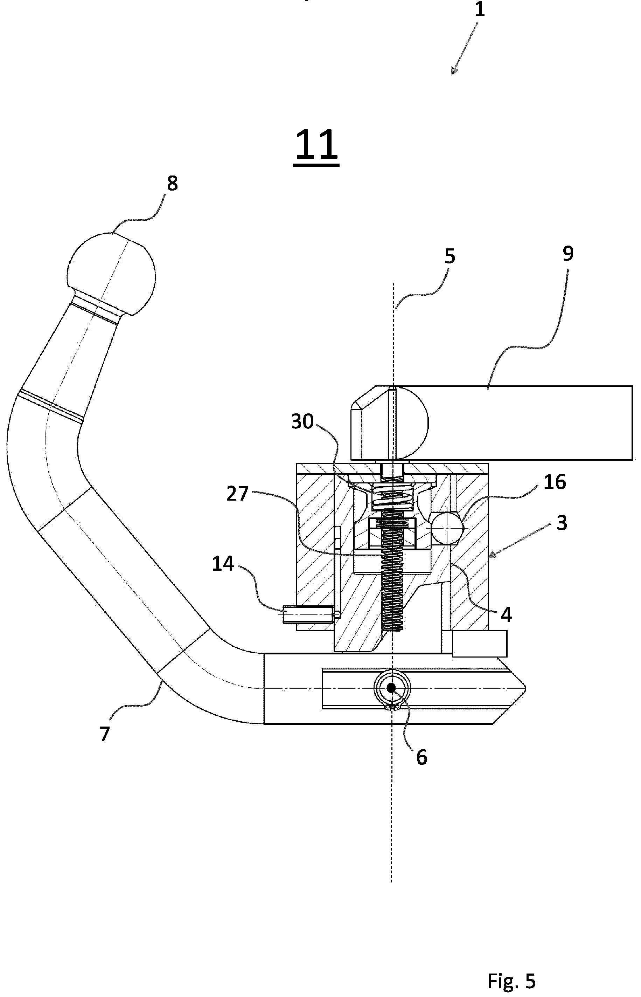

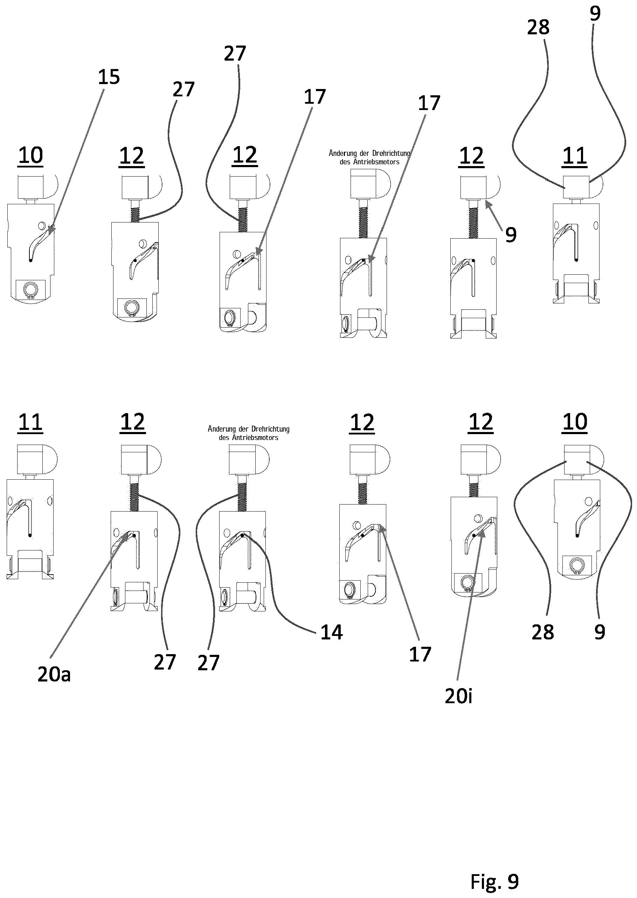

Die Anhängevorrichtung 1 weist weiterhin eine Antriebsvorrichtung 9 auf. Die Antriebsvorrichtung 9 ist vorliegend in Form eines Spindelantriebs ausgebildet, der beispielsweise elektrisch betreibbar ist. Hierbei umfasst die einfach auch als Spindelantrieb bezeichnete Antriebsvorrichtung 9 eine Spindel 27 sowie ein Getriebe 28. Dies ist beispielsweise in Figur 9 dargestellt. Das Getriebe 28 ist verzichtbar, sofern die Antriebsvorrichtung 9 ein ausreichend großes Drehmoment bereitstellen kann. Mittels der Antriebseinrichtung 9 ist die Kugelstange 7 von einer Betriebsposition 10 in eine Parkposition 11 überführbar und umgekehrt. Die Betriebsposition 10, in der sich die Kupplungskugel 8 frei zugänglich hinter dem Heck des Fahrzeugs befindet, ist beispielsweise in Figur 1 oder 3 dargestellt. Die Parkposition 11, in der sich die Kupplungskugel 8 verdeckt unterhalb des Fahrzeugs und insbesondere hinter dem Stoßfänger befindet, ist beispielsweise in Figur 2 oder 5 dargestellt. In diesem Zusammenhang kann die Kupplungskugel 8 in Abhängigkeit von einer Bauweise des Querträgers 2 vor, hinter und/oder unter diesem angeordnet sein. Während einer Überführung der Kupplungsstange 7 zwischen der Parkposition 11 und der Betriebsposition 10, beziehungsweise umgekehrt, durchläuft die Kupplungsstange 7 außerdem mindestens eine Zwischenposition 12. Dies ist beispielsweise in Figur 4, Figur 6 oder Figur 9 dargestellt.

Außerdem umfasst die Anhängevorrichtung 1 eine Kulissenführung 13, mittels der der Schwenklagerkörper 4 während der Überführung von der Betriebsposition 10 in die Parkposition 11 sowie umgekehrt sowohl translatorisch in vertikale Richtung als auch rotatorisch um die vertikal ausgerichtete erste Schwenkachse 5 bewegbar ist.

Hierbei sind vorliegend ein Kulissenstein 14 an der Schwenklagereinheit 3 und eine mit dem Kulissenstein 14 zusammenwirkende Kulissenbahn 15 in dem Schwenklagerkörper 4 angeordnet. Die Kulissenführung 13 umfasst also sowohl die Kulissenbahn 15 als auch den Kulissenstein 14.

Weiterhin ist mindestens eine Blockiereinrichtung 16 vorgesehen, mittels welcher der Schwenklagerkörper 4 relativ zu der Schwenklagereinheit 3 und die Kugelstange 7 relativ zu dem Schwenklagerkörper 4 oder der Schwenklagereinheit 3 blockierbar sind. Mit anderen Worten ist der Schwenklagerkörper 4 insbesondere in der Parkposition 11 beziehungsweise der Betriebsposition 10 mittels der Blockiereinrichtung 16 blockierbar beziehungsweise arretierbar.

Der Kulissenstein 14 ist in eine Richtung entlang der Bahn, d. h. in eine Bahnrichtung, relativ zu der Kulissenbahn bewegbar. Dabei bewegt sich der Schwenklagerkörper 4 relativ zu der fahrzeugfesten Schwenklagereinheit 3, wobei eine Zwangskopplung über das Kulissengetriebe vorliegt. Außerdem weist die Kulissenbahn 15 in einem Umkehrabschnitt 17, in dem sich eine vertikale Bewegungsrichtung des Schwenklagerkörpers 4 umkehrt, eine Stufe 18 auf. Diese ist besonders deutlich in Figur 7 dargestellt. Diese Stufe 18 ist von dem Kulissenstein 14 bei der Überführung der Kugelstange 7 von der Parkposition 11 in die Betriebsposition 10 überfahrbar, wodurch der Kulissenstein 14 sich zumindest mit einer zu der Bahnrichtung senkrechten Bewegungskomponente die Stufe 18 hinab bewegt, um dann an einer Stufenbasis anzuliegen oder zu dieser einen kleinen Abstand aufzuweisen.

Um die Anhängevorrichtung 1 beziehungsweise die Kugelstange 7 von der Parkposition 11 in die Betriebsposition 10 beziehungsweise umgekehrt verschwenken zu können, muss die Kugelstange 7 also einerseits absenkbar beziehungsweise anhebbar und andererseits seitlich verschwenkbar sein. Dieser Hergang wird besonders in Zusammenschau der Figuren 1 und 2 deutlich. Während die Kugelstange 7 gemäß Figur 1 und in der Betriebsposition 10 von hinten gesehen mittig vor dem einfach auch als Querträger bezeichneten Fahrzeugteil 2 angeordnet ist, befindet sich die Kugelstange 7 gemäß Figur 2 und in der Parkposition von hinten gesehen hinter dem Querträger 2. Demzufolge muss die Kugelstange 7 gewissermaßen unter dem Stoßfänger "abtauchen" beziehungsweise "hinwegtauchen" können. Hierfür ist es erforderlich, die Kugelstange 7 abzusenken beziehungsweise abklappen zu können. Diese Zwischenposition 12 ist in Figur 4 dargestellt.

Die einfach auch als Spindelantrieb bezeichnete Antriebseinrichtung 9 ist mit einem Betätigungskörper 22 verbunden. Vorliegend ist die Spindel mit einem Außengewinde ausgebildet und der Betätigungskörper 22 mit einem damit korrespondierenden Innengewinde. Durch diese Ausgestaltung fungiert der Betätigungskörper 22 gewissermaßen als Mutter. Weiterhin ist um die Spindel 27 herum eine Federelement 30, vorliegend beispielsweise in Form einer Druckfeder, umhüllt. Mit anderen Worten ist die Spindel 27 gewissermaßen durch das Federelement 30 hindurchgesteckt, mithin in diesem angeordnet. Die Spindel 27 und das Federelement 30 sind folglich zumindest im Wesentlichen koaxial angeordnet. Hierbei ist das Federelement 30 derart angeordnet, dass ein Ende zumindest im Wesentlichen an dem Schwenklagerkörper 4 angeordnet ist. Außerdem ist ein gegenüberliegendes Ende an dem Betätigungskörper 22 angeordnet. Mit anderen Worten ist das Federelement 30 beidseitig abgestützt, nämlich einerseits (nach oben) durch den Schwenklagerkörper 4 und andererseits (nach unten) durch den Betätigungskörper 22. Die Figuren 3 bis 5 zeigen dies besonders deutlich.

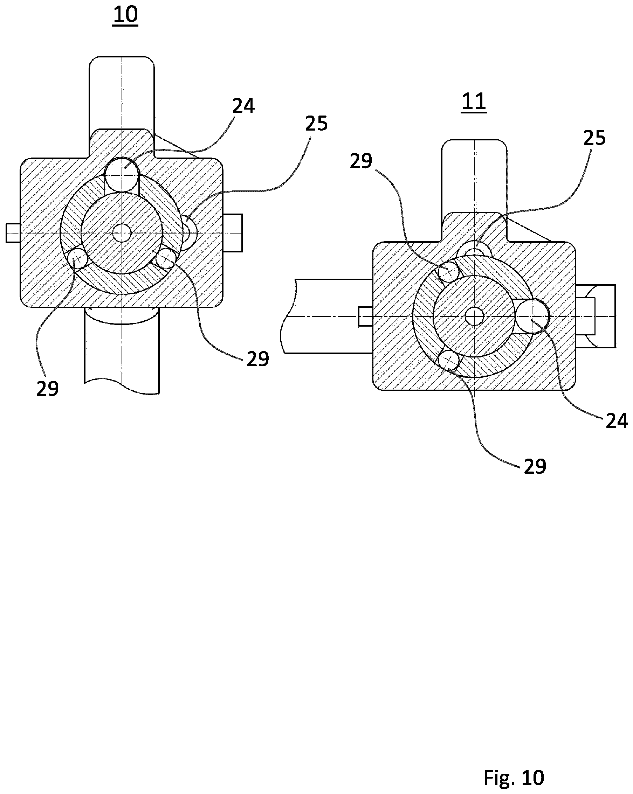

Durch Betätigen des Spindelantriebs 9 kann der Betätigungskörper 22 höhenverstellt werden. Hierbei ist der Betätigungskörper 22 in der Betriebsposition 10 oben an dem Spindelantrieb 9 angeordnet. Dies ist beispielsweise in Figur 3 dargestellt. Im Folgenden wird mittels des Spindelantriebs 9 der Betätigungskörper 22 immer weiter vertikal entlang der ersten Schwenkachse 5 nach unten bewegt. Hierbei ist der Betätigungskörper 22 vorliegend in dem Schwenklagerkörper 4 angeordnet, wobei der Betätigungskörper 22 zu einem Anschlag 23 des Schwenklagerkörpers 4 beabstandet ist. Weiterhin ist ein Passstift 36 vorgesehen, mittels welchem der Schwenklagerkörper 4 und der Betätigungskörper 22 miteinander verbunden sind. Der Passstift 36 ist dabei derart an beziehungsweise in dem Schwenklagerkörper 4 und/oder dem Betätigungskörper 22 angeordnet, dass diese relativ zueinander drehblockiert sind. Dies ist beispielsweise in der Figur 10 erkennbar. Allerdings ist eine relative Bewegung in axialer Richtung zueinander weiterhin möglich. Mit anderen Worten bewirkt der Betätigungskörper 22 erst dann eine Bewegung der Schwenklagerkörpers 4, wenn der Betätigungskörper 22 eine radial nach innen gerichtete Bewegung des Blockierkörpers erlaubt und somit den Formschluss zwischen Schwenllagerkörper 4 und Schwenklagereinheit 3 aufhebt.

Der Betätigungskörper 22 folgt dabei nach Freigabe der Blockiereinrichtung aufgrund seines Eigengewichts dem Betätigungskörper 22 bei seiner Abwärtsbewegung (und auch bei der Aufwärtsbewegung). Dabei stützt sich der Schwenklagerkörper über das Federelement 30 auf dem Schwenklagerkörper ab. Die Steifigkeit des Federelements 30 ist so bemessen, dass dieses das Eigengewicht der Kugelstange tragen kann, ohne dabei auf Block komprimiert zu werden.

Gegenüber der in Figur 3 dargestellten Betriebsposition 10, in welcher sich die Kupplungskugel 8 zumindest im Wesentlichen auf gleicher Höhe wie der Querträger 2 befindet, ist die Kupplungskugel 8, wie in Figur 4 dargestellt, bereits deutlich in Bezug auf den Querträger 2 abgesenkt. In diesem Zusammenhang bewegt sich die Kugelstange 7 außerdem aus dem Sicherungsanschlag 26 heraus. Die ist in Figur 4 dargestellt.

Um nun neben dieser rein vertikalen Bewegung eine Rotationsbewegung ausführen zu können, ist der Schwenklagerkörper 4 mit der Kulissenführung 13 versehen. Hierbei umfasst der Schwenklagerkörper 4 die zumindest teilweise ringsherum um diesen verlaufende Kulissenbahn 15. Die Kulissenbahn 15 ist vorliegend in Form einer Nut ausgebildet. In die Kulissenbahn 15 greift der Kulissenstein 14 ein. Dieser ist vorliegend beispielsweise in Form eines Stiftes ausgebildet und in der Schwenklagereinheit 3 angeordnet, über deren innere Mantelfläche er hervorragt. Die Figuren 5 und 6 zeigen dies besonders deutlich. Mit anderen Worten fährt der Kulissenstein 14 die Kulissenbahn 15 ab und gibt somit eine Drehrichtung des Schwenklagerkörpers 4 vor. Hierbei steht die Schwenklagereinheit 3 still, wohingegen sich der Schwenklagerkörper 4 relativ zu dieser bewegt.

Hierbei weist die Kulissenbahn 15 eine Breite 19 sowie eine äußere Wandung 20a und eine innere Wandung 20i auf. In diesem Zusammenhang ist vorliegend vorgesehen, dass der Kulissenstein 14 zumindest teilweise entsprechend der Breite 19 in die Kulissenbahn 15 hineinragt. Mit anderen Worten steht der Kulissenstein 14 zumindest mit einem Teil der Breite 19 in der Kulissenbahn 15, sodass er in diese eingreifen kann. Während der Bewegung kommt der Kulissenstein 14 daher in Kontakt mit der Wandung 20a beziehungsweise 20i. Dies ist in den Figuren 7 und 9 dargestellt.

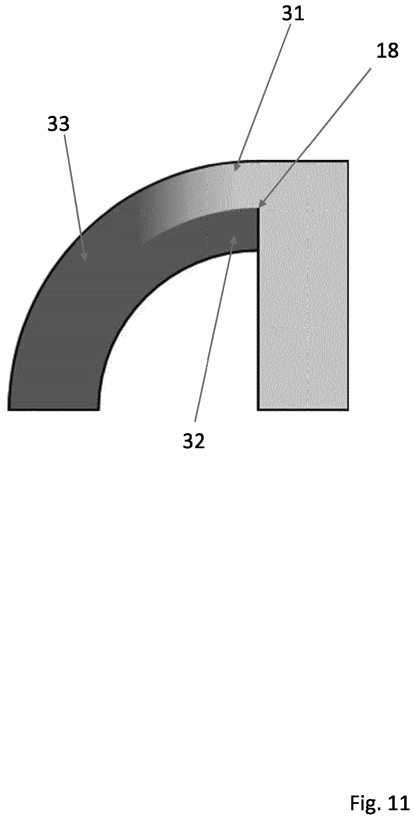

Außerdem weist die Kulissenbahn 14 eine Stufe 18 mit einer Tiefe 21 auf, wie Figur 7 besonders deutlich zeigt. Entsprechend weist die Kulissenbahn 14 im Bereich der Stufe 18 eine Tiefstelle 32, mithin "unten" an der Stufe 18, und eine Hochstelle 31, mithin "oben" an der Stufe 18, auf. Die Kulissenbahn 14 weist weiterhin einen Neigungsabschnitt 33 auf, welcher derart ausgebildet ist, dass er eine höhenmäßige Differenz zwischen der Tiefstelle 32 und der Hochstelle 31 überbrücken kann. Mit anderen Worten verbindet der Neigungsabschnitt 33 die Tiefstelle 32 mit der Hochstelle 31 beziehungsweise umgekehrt. Wieder mit anderen Worten ermöglicht der Neigungsabschnitt 33 es, von der Tiefstelle 32 zur Hochstelle aufwärts zu fahren beziehungsweise von der Hochstelle 31 zur Tiefstelle 32 abwärts zu fahren. Dies ist in Figur 11 erkennbar.

Diese Stufe 18 ist notwendig, um den Kulissenstein 14 bei einer Umkehr der Drehrichtung der Spindel 27 mittels des Spindelantriebs 9, wie dies in Figur 9 gezeigt ist, gewissermaßen innerhalb der Kulissenbahn 14 "lenken" zu können. Die Stufe besitzt somit eine Weichenfunktion, allerdings ohne dass hierfür ein mechanisch bewegbares Bauteil, wie etwa eine Weichenzunge, nötig wäre. Dieses Verhalten ist dem unteren Teil der Figur 9 zu entnehmen. Die Anhängevorrichtung 1 wird von der Parkposition 11, wie dies unten links in Figur 9 dargestellt ist, in die Betriebsposition 10, wie dies unten rechts in Figur 9 dargestellt ist, überführt. Hierbei würde sich der Kulissenstein 14 ohne weitere Einwirkung an der äußeren Wandung 20a bewegen. Daher wird der Kulissenstein 14 mittels der Stufe 18 an die innere Wandung 20i gelenkt.

In Figur 11 ist außerdem deutlich zu erkennen, dass die Stufe 18 im Bereich zwischen Tiefstelle 32 und Hochstelle 31 angeordnet ist, mithin gewissermaßen zwischen beiden eine Grenze bildet.

Um die Anhängevorrichtung 1 sowohl in der Parkposition 11 als auch in der Betriebsposition 10 zu sichern, ist weiterhin die Blockiereinrichtung 16 vorgesehen. Die Blockiereinrichtung 16 umfasst einen Blockierkörper 24, der vorliegend in Form einer Kugel ausgestaltet ist. Außerdem umfasst die Schwenklagereinheit 3 eine mit dem Blockierkörper 24 korrespondierende Aussparung 25. Dies ist außerdem in Figur 10 in einer schematischen Schnittansicht von oben auf die Schwenklagereinheit 3 dargestellt. Mit anderen Worten kann der Blockierkörper 24 zumindest teilweise in die Aussparung 25 eingreifen. Dies ist beispielsweise in Figur 5 dargestellt. Hierbei ist der Blockierkörper 24 in dem Schwenklagerkörper 4 angeordnet und bewegt sich entsprechend mit diesem. Mit anderen Worten wird der Blockierkörper 24 bei einer Aufwärts- oder Abwärtsbewegung in Bezug auf die erste Schwenkachse 5 entsprechend mit hoch beziehungsweise runter bewegt. Wieder mit anderen Worten kommt der Blockierkörper 24 genau dann in Eingriff mit der Aussparung 25, wenn sich beide auf derselben Höhe befinden. Ist der Blockierkörper 24 in der Aussparung 25 angeordnet, ist die Anhängevorrichtung 1 blockiert.

Weiterhin umfasst die Anhängevorrichtung 1 vorliegend zwei Stützkörper 29, wie beispielsweise in Figur 10 erkennbar ist. In Figur 10 ist außerdem besonders gut erkennbar, wie der Stützkörper 29 in der - hier zumindest im Wesentlichen in Form einer Hülse ausgebildeten - Schwenklagereinheit 3 angeordnet ist. Die Stützkörper 29 sind hierbei in dem Schwenklagerkörper 4 derart angeordnet, dass sie sich gewissermaßen an einer Innenseite der hülsenförmigen Schwenklagereinheit 3 abstützen beziehungsweise umgekehrt. Die Stützkörper 29 dienen folglich dazu, den Betätigungskörper 22 sowie den Schwenklagerköper 4 innerhalb von der Schwenklagereinheit 3 zu führen und/oder abzustützen.

Wie Figur 10 deutlich zeigt, sind die Stützkörper 29 - in einer Ebene senkrecht zu der ersten Schwenkachse 5 betrachtet - zu dem Blockierkörper 24 vorliegend zumindest im Wesentlichen um genau 120° versetzt angeordnet. Der Blockierkörper 24 und die Stützkörper 29 sind demzufolge auf einem Kreis, der als Mittelpunkt die erste Schwenkachse 5 hat, in demselben Abstand zueinander angeordnet. Mit anderen Worten sind der Blockierkörper 24 und die Stützkörper 29 gleichmäßig, mithin drehsymmetrisch um die erste Schwenkachse 5, angeordnet.

Die Stützkörper 29 sind in eine Führungsrichtung mit mindestens einer Komponente radial zu der ersten Schwenkachse 5 bewegbar, wobei die Stützkörper 29 mittels des Betätigungskörpers 22 in der Führungsrichtung bewegbar sind. Vorliegend erfolgt die Bewegung sogar in exakt radiale Richtung. Diese radiale Bewegungsrichtung ermöglicht es den Stützkörpern 29, Kräfte, beispielsweise von der Schwenklagereinheit 3, aufzunehmen. Mit anderen Worten können die Stützkörper 29 beispielsweise von der Schwenklagereinheit 3 ansonsten zumindest im Wesentlichen unmittelbar auf den Schwenklagerkörper 4 einwirkende Kräfte aufnehmen, mithin absorbieren. Hierdurch werden die Kräfte, insbesondere von der Schwenklagereinheit 3 auf den Betätigungskörper 22 sowie den Schwenklagerkörper 4 wirkend beziehungsweise umgekehrt, verteilt.

Vorliegend ist der Betätigungskörper 22 zumindest im Bereich seiner Druckfläche konisch ausgestaltet. Mittels der Druckfläche des Betätigungskörpers 22 sind die Stützkörper in der Führungsrichtung bewegbar. Dies ist derart vorstellbar, dass die Stützkörper 29 gewissermaßen von der Druckfläche in Führungsrichtung hochgedrückt werden. Hierbei sind die Stützkörper 29 in der Freigabestellung des Betätigungskörpers 22 außer Kontakt mit der Schwenklagereinheit 3. Außerdem sind mittels der Stützkörper 29 in der Blockierstellung des Betätigungskörpers 22 ausschließlich radial zu der ersten Schwenkachse gerichtete Druckkräfte von dem Betätigungskörper 22 auf die Schwenklagereinheit 3 übertragbar. Dies liegt daran, dass die innere Mantelfläche der Schwenklagereinheit 3 an der Kontaktstelle der Stützkörper exakt zylindrisch ausgeführt ist und insbesondere keinerlei Ausnehmungen aufweist, in die die Stützkörper zur Bildung eines Formschlusses eintreten könnten

Figur 9 zeigt in einer schematischen Übersicht verschiedene Zustände des Schwenklagerkörpers 4 während eines Betriebes der Anhängevorrichtung 1. Hierbei ist deutlich erkennbar, dass der Spindelantrieb 9 beziehungsweise dessen in Axialrichtung fahrzeugfeste Spindel 27 im Laufe des Betriebs unterschiedlich weit an der Oberseite des Schwenklagerkörpers 4 aus diesem herausragt. Sowohl in der Parkposition 11 als auch in der Betriebsposition 10 ragt die Spindel 27 aus dem Betätigungskörper 22 hervor. Da der Betätigungskörper 22 den Schwenklagerkörper 4 gewissermaßen "mitnimmt", ist auch der Schwenklagerkörper 4 in der Betriebsposition 10 beziehungsweise der Parkposition 11 zumindest nicht wesentlich relativ zu der Spindel 27 ausgefahren. Demgegenüber ist der Schwenklagerkörper 4 in der Zwischenposition 12 deutlich relativ zu der Spindel 27 beabstandet, mithin gegenüber dieser ausgefahren. Figur 4 zeigt dies. Mit anderen Worten wird der Schwenklagerkörper 4 nur ausgefahren, um die Anhängevorrichtung 1 von der Parkposition 11 in die Betriebsposition 10 zu verbringen beziehungsweise umgekehrt. Mit anderen Worten ist der Schwenklagerkörper 4 ausschließlich in der jeweiligen Zwischenposition 12 (Umkehrstellung/-position) ausgefahren, wie auch aus Figur 9 deutlich hervorgeht.

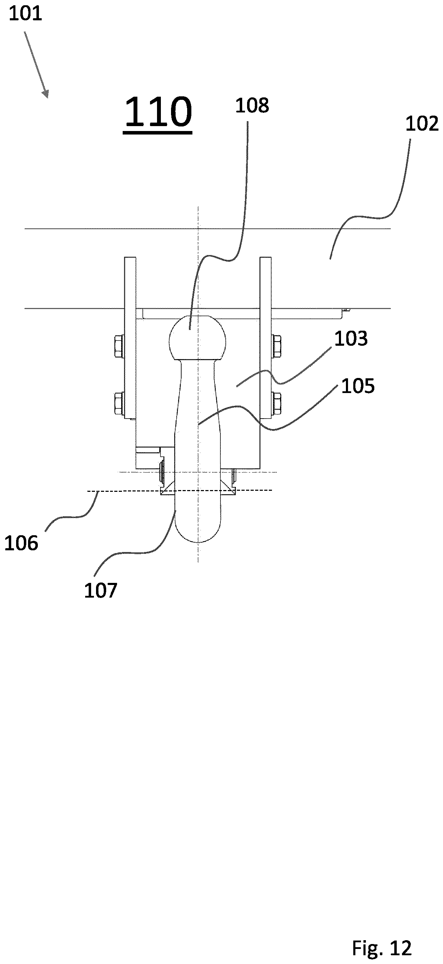

Figur 12 zeigt in einer schematischen Ansicht eine erfindungsgemäße Anhängevorrichtung 101 gemäß einer weiteren Ausgestaltung, wobei diese zumindest mittelbar an dem Fahrzeugteil 102 des Fahrzeugs montiert ist und sich in der Betriebsposition 110 befindet. Bei dem Fahrzeugteil 102 handelt es sich vorliegend um einen hinteren Querträger des Fahrzeugs. Der Querträger kann entweder bereits baulich, das heißt von Werk aus, als Teil des Fahrzeugs, insbesondere dessen Karosserie, oder als Teil eines Lieferumfangs der Anhängevorrichtung 101 vorgesehen sein. Die Schwenklagereinheit 103 ist vorliegend beispielsweise mittels einer Schraubenverbindung an einem Halteblech befestigt, welches wiederum mit dem einfach auch als Querträger bezeichneten Fahrzeugteil 102 verschweißt ist. Der Querträger 102 ist wiederum mit dem Fahrzeug, insbesondere dessen Karosserie, verbunden. Mit anderen Worten ist die Anhängevorrichtung 101 in Figur 12 zumindest im Wesentlichen gemäß ihrem vollständig hergestellten Zustand dargestellt.

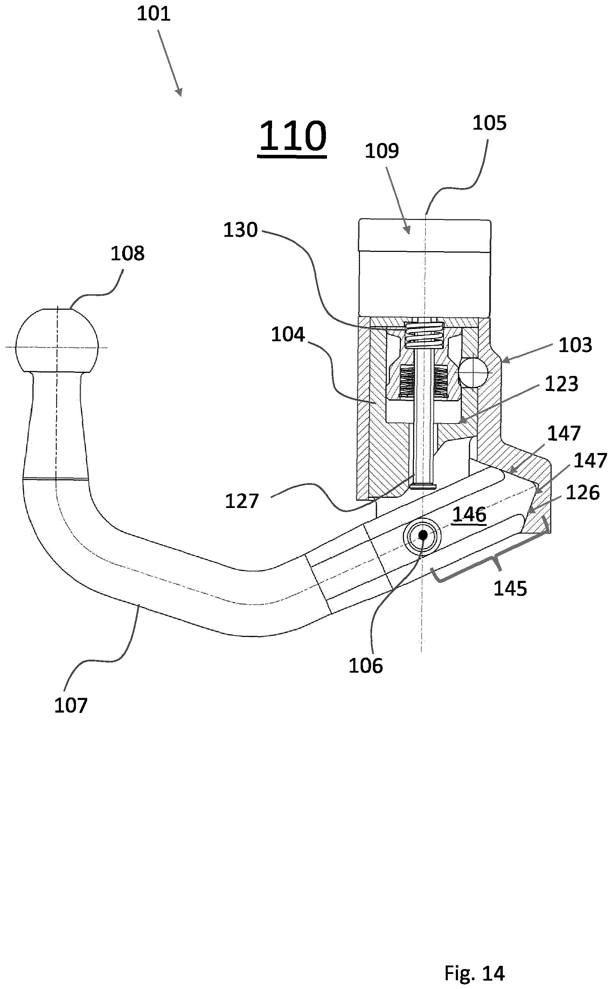

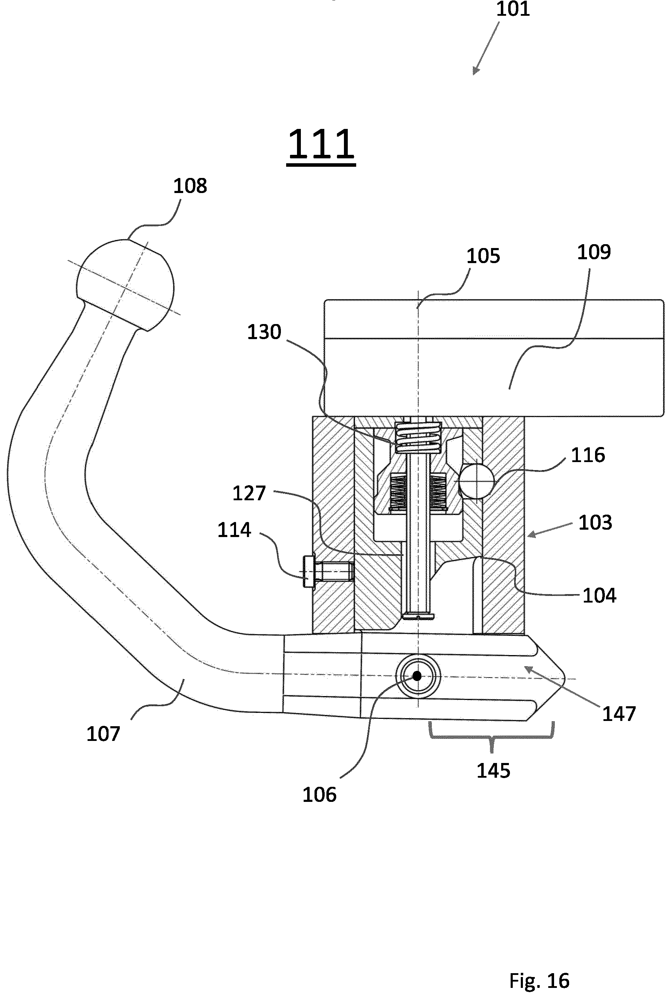

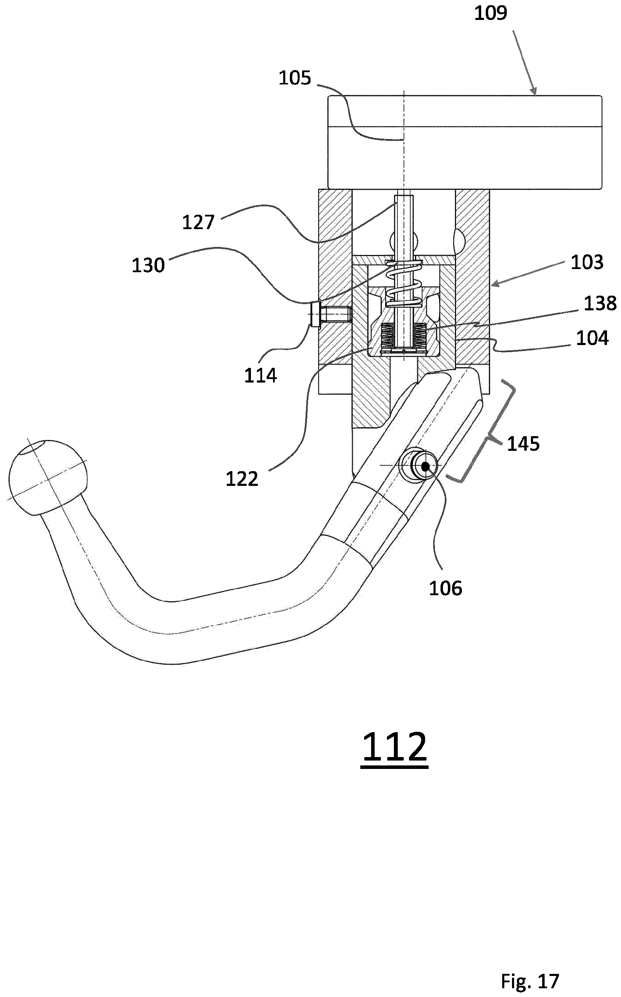

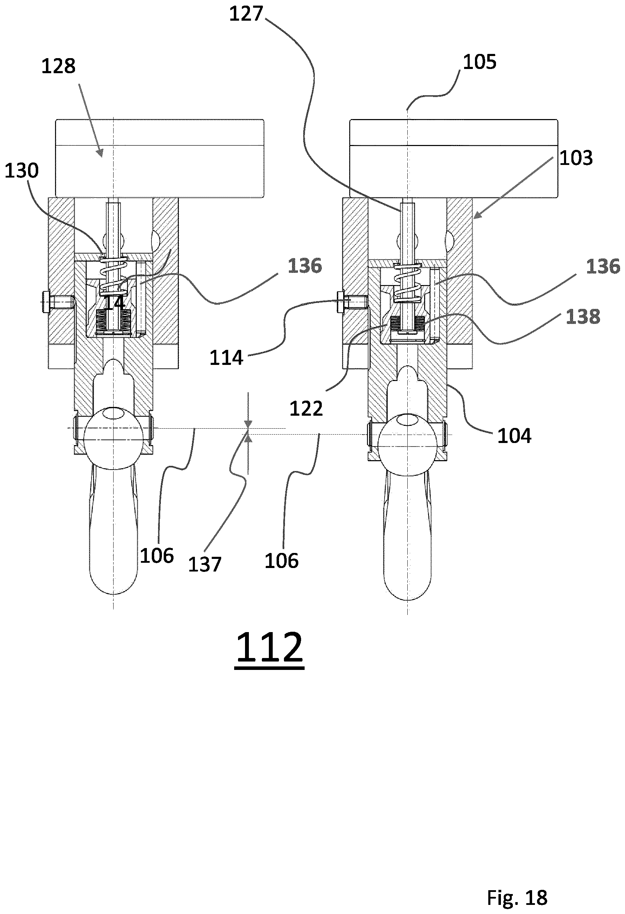

Die Anhängevorrichtung 101 umfasst eine Schwenklagereinheit 103, die in Kraft übertragender Weise mit dem Fahrzeugteil 102 verbunden ist. Die Schwenklagereinheit 103 weist eine vertikal verlaufende erste Schwenkachse 105 auf, wie beispielsweise in Figur 12 dargestellt ist. Außerdem umfasst die Anhängevorrichtung einen Schwenklagerkörper 104. Dieser ist, wie die Figuren 14 bis 17 besonders deutlich zeigen, in beziehungsweise an der Schwenklagereinheit 103 gelagert. Hierbei wird durch den Schwenklagerkörper 104 eine zweite Schwenkachse 106 definiert, die zumindest im Wesentlichen horizontal verläuft. Diese zweite Schwenkachse 106 ist beispielsweise in den Figuren 16 und 17 dargestellt. Insbesondere Figur 18 zeigt besonders deutlich, dass die erste Schwenkachse 105 und die zweite Schwenkachse 106 zumindest im Wesentlichen senkrecht zueinanderstehen.

Die Anhängevorrichtung 101 umfasst außerdem eine Kugelstange 107, die an einem Ende eine Kupplungskugel 108 aufweist. Dies ist beispielsweise den Figuren 14 bis 16 zu entnehmen. Mittels der Kupplungskugel 108 kann ein Zusatzgerät, beispielsweise ein Anhänger, an das Fahrzeug angekuppelt werden. Dazu wird beispielsweise ein mit der Kupplungskugel 108 korrespondierendes Kupplungsstück des Zusatzgeräts auf den Kugelkopf 108 aufgesetzt. Mit anderen Worten kann das Zusatzgerät durch Einhängen an beziehungsweise auf die Kupplungskugel 108 zumindest mittelbar mit dem Fahrzeug verbunden werden.

Die Kupplungsstange 107 ist schwenkbar und gelenkig mit dem Schwenklagerkörper 104 verbunden. Mit anderen Worten kann die Kugelstange 107 derart um die zweite Schwenkachse 106 verschwenkt werden, dass verschiedene Positionen erreichbar sind, wie beispielsweise in Zusammenschau der Figuren 14 bis 16 deutlich wird.

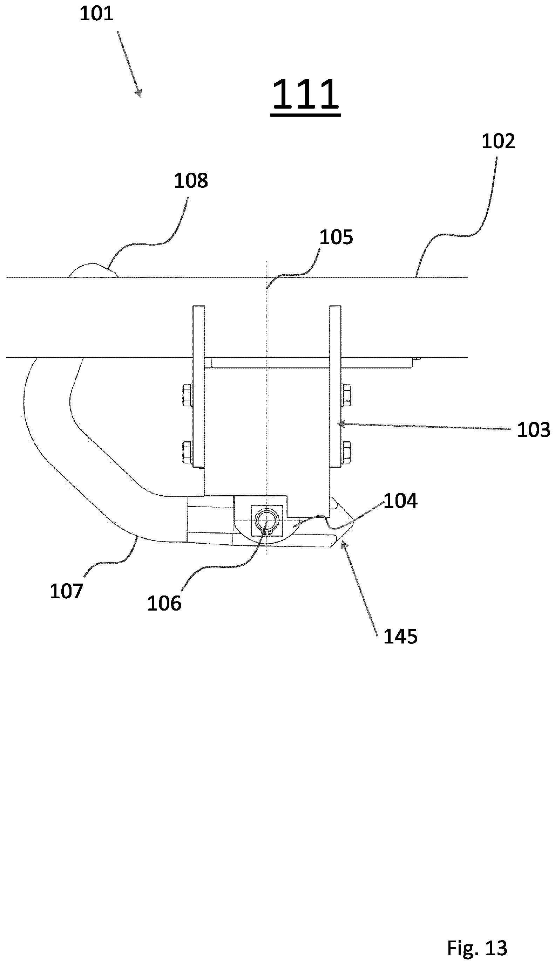

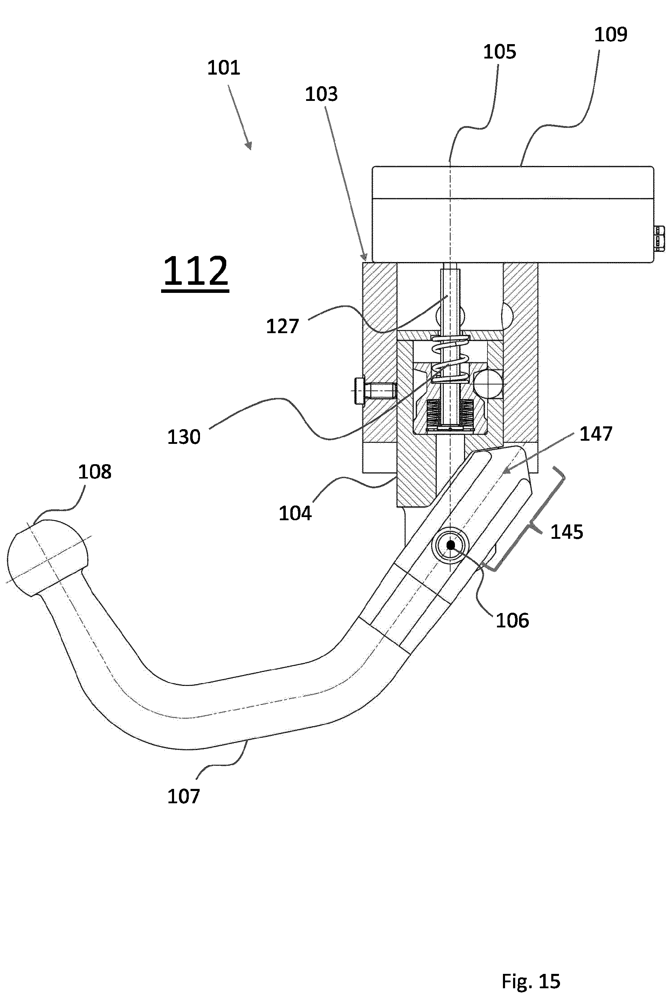

Die Anhängevorrichtung 101 weist weiterhin eine Antriebsvorrichtung 109 auf. Die Antriebsvorrichtung 109 ist vorliegend in Form eines Spindelantriebs ausgebildet, der beispielsweise elektrisch betreibbar ist. Hierbei umfasst die einfach auch als Spindelantrieb bezeichnete Antriebsvorrichtung 109 eine Spindel 127 sowie ein Getriebe 128. Dies ist beispielsweise in Figur 18 dargestellt. Das Getriebe 128 ist verzichtbar, sofern die Antriebsvorrichtung 109 ein ausreichend großes Drehmoment bereitstellen kann. Mittels der Antriebseinrichtung 109 ist die Kugelstange 107 von einer Betriebsposition 110 in eine Parkposition 111 überführbar und umgekehrt. Die Betriebsposition 110, in der sich die Kupplungskugel 108 frei zugänglich hinter dem Heck des Fahrzeugs befindet, ist beispielsweise in Figur 12 oder 14 dargestellt. Die Parkposition 111, in der sich die Kupplungskugel 108 verdeckt unterhalb des Fahrzeugs und insbesondere hinter dem Stoßfänger befindet, ist beispielsweise in Figur 13 oder 16 dargestellt. In diesem Zusammenhang kann die Kupplungskugel 108 in Abhängigkeit von einer Bauweise des Querträgers 102 vor, hinter und/oder unter diesem angeordnet sein. Während einer Überführung der Kupplungsstange 107 zwischen der Parkposition 111 und der Betriebsposition 110, beziehungsweise umgekehrt, durchläuft die Kupplungsstange 107 außerdem mindestens eine Zwischenposition 112. Dies ist beispielsweise in Figur 15, Figur 17 oder Figur 20 dargestellt.

Außerdem umfasst die Anhängevorrichtung 101 eine Kulissenführung 113, mittels der der Schwenklagerkörper 104 während der Überführung von der Betriebsposition 110 in die Parkposition 111 sowie umgekehrt sowohl translatorisch in vertikale Richtung als auch rotatorisch um die vertikal ausgerichtete erste Schwenkachse 105 bewegbar ist.

Hierbei sind vorliegend ein Kulissenstein 114 an der Schwenklagereinheit 103 und eine mit dem Kulissenstein 114 zusammenwirkende Kulissenbahn 115 in dem Schwenklagerkörper 104 angeordnet. Die Kulissenführung 113 umfasst also sowohl die Kulissenbahn 115 als auch den Kulissenstein 114.

Weiterhin ist mindestens eine Blockiereinrichtung 116 vorgesehen, mittels welcher der Schwenklagerkörper 104 relativ zu der Schwenklagereinheit 103 und die Kugelstange 107 relativ zu dem Schwenklagerkörper 104 oder der Schwenklagereinheit 103 blockierbar sind. Mit anderen Worten ist der Schwenklagerkörper 104 insbesondere in der Parkposition 111 beziehungsweise der Betriebsposition 110 mittels der Blockiereinrichtung 116 blockierbar beziehungsweise arretierbar.

Der Kulissenstein 114 ist in eine Richtung entlang der Bahn, d. h. in eine Bahnrichtung, relativ zu der Kulissenbahn bewegbar. Dabei bewegt sich der Schwenklagerkörper 4 relativ zu der fahrzeugfesten Schwenklagereinheit 3, wobei eine Zwangskopplung über das Kulissengetriebe vorliegt.

Um die Anhängevorrichtung 101 beziehungsweise die Kugelstange 107 von der Parkposition 111 in die Betriebsposition 110 beziehungsweise umgekehrt verschwenken zu können, muss die Kugelstange 107 also einerseits absenkbar beziehungsweise anhebbar und andererseits seitlich verschwenkbar sein. Dieser Hergang wird besonders in Zusammenschau der Figuren 12 und 13 deutlich. Während die Kugelstange 107 gemäß Figur 12 und in der Betriebsposition 110 von hinten gesehen mittig vor dem einfach auch als Querträger bezeichneten Fahrzeugteil 102 angeordnet ist, befindet sich die Kugelstange 107 gemäß Figur 13 und in der Parkposition von hinten gesehen hinter dem Querträger 102. Demzufolge muss die Kugelstange 107 gewissermaßen unter dem Stoßfänger "abtauchen" beziehungsweise "hinwegtauchen" können. Hierfür ist es erforderlich, die Kugelstange 107 abzusenken beziehungsweise abklappen zu können. Diese Zwischenposition 112 ist in Figur 15 dargestellt.

Die einfach auch als Spindelantrieb bezeichnete Antriebseinrichtung 109 ist mit einem Betätigungskörper 122 verbunden. Vorliegend ist die Spindel mit einem Außengewinde ausgebildet und der Betätigungskörper 122 mit einem damit korrespondierenden Innengewinde. Durch diese Ausgestaltung fungiert der Betätigungskörper 122 gewissermaßen als Mutter. Weiterhin ist um die Spindel 127 herum ein Federelement 130, vorliegend beispielsweise in Form einer Druckfeder, angeordnet. Mit anderen Worten ist die Spindel 127 gewissermaßen durch das Federelement 130 hindurchgesteckt, mithin in diesem angeordnet. Die Spindel 127 und das Federelement 130 sind folglich zumindest im Wesentlichen koaxial angeordnet. Hierbei ist das Federelement 130 derart angeordnet, dass ein Ende zumindest im Wesentlichen an dem Schwenklagerkörper 104 angeordnet ist. Außerdem ist ein gegenüberliegendes Ende an dem Betätigungskörper 122 angeordnet. Mit anderen Worten ist das Federelement 130 beidseitig abgestützt, nämlich einerseits (nach oben) durch den Schwenklagerkörper 104 und andererseits (nach unten) durch den Betätigungskörper 122. Die Figuren 14 bis 16 zeigen dies besonders deutlich.

Durch Betätigen des Spindelantriebs 109 kann der Betätigungskörper 122 höhenverstellt werden. Hierbei ist der Betätigungskörper 122 in der Betriebsposition 110 oben an dem Spindelantrieb 109 angeordnet. Dies ist beispielsweise in Figur 14 dargestellt. Im Folgenden wird mittels des Spindelantriebs 109 der Betätigungskörper 122 immer weiter vertikal entlang der ersten Schwenkachse 105 nach unten bewegt. Hierbei ist der Betätigungskörper 122 vorliegend in dem Schwenklagerkörper 104 angeordnet, wobei der Betätigungskörper 122 zu einem Anschlag 123 des Schwenklagerkörpers 104 beabstandet ist. Weiterhin ist ein Passstift 136 vorgesehen, mittels welchem der Schwenklagerkörper 104 und der Betätigungskörper 122 miteinander verbunden sind. Der Passstift 136 ist dabei derart an beziehungsweise in dem Schwenklagerkörper 104 und/oder dem Betätigungskörper 122 angeordnet, dass diese relativ zueinander drehblockiert sind. Allerdings ist eine relative Bewegung in axialer Richtung zueinander weiterhin möglich. Mit anderen Worten bewirkt der Betätigungskörper 122 erst dann eine Bewegung des Schwenklagerkörpers 104, wenn der Betätigungskörper 122 mittels des Spindelantriebs 109 soweit nach unten bewegt wird, dass der Betätigungskörper 122 dem Blockierkörper zwecks Verlassen seiner Formschlussstellung (Blockierstellung) eine Aufnahme im Bereich eines reduzierten Außendurchmessers bietet. Wieder mit anderen Worten ist der Betätigungskörper 122 gewissermaßen dazu ausgebildet, den Schwenklagerkörper 104 schwerkraftbedingt "mitzunehmen".

Der Betätigungskörper 122 muss folglich mittels einer Drehung der Spindel 127 erst so weit nach unten bewegt werden bis die Blockiereinrichtung gelöst wird. Der Betätigungskörper 22 folgt dabei nach Freigabe der Blockiereinrichtung aufgrund seines Eigengewichts dem Betätigungskörper 22 bei seiner Abwärtsbewegung (und auch bei der Aufwärtsbewegung). Dabei stützt sich der Schwenklagerkörper 104 über das Federelement 30 auf dem Betätigungskörper 122 ab. Die Steifigkeit des Federelements 30 ist so bemessen, dass dieses das Eigengewicht der Kugelstange 107 tragen kann, ohne dabei auf Block komprimiert zu werden.

Die Blockiereinrichtung 116, die vorliegend in Form einer Kugel ausgebildet ist, und zwischen Schwenklagereinheit 103 und Schwenklagerkörper 104 angeordnet ist, wird durch den Betätigungskörper 122 nach Art eines "Steuerschiebers" gesteuert, d.h. radial nach außen (=Blockade) bewegt bzw. nach innen eingelassen (=Freigabe).

Mittels der Antriebseinrichtung 109 kann somit zumindest mittelbar die Kugelstange 107 von der Betriebsposition 110 in die Parkposition 111 beziehungsweise umgekehrt verschwenkt werden.

Die vorliegend als Spindel ausgeführte Antriebseinrichtung 109 bewirkt - bei Betrachtung von oben - bei einer Rotation gegen den Uhrzeigersinn eine Bewegung des Betätigungskörpers 122 nach unten. Somit befindet sich die Kugelstange 107 vor beziehungsweise bei einer Rotation der Spindel im Uhrzeigersinn in der Betriebsposition 110. Mit anderen Worten ist der Betätigungskörper 122 in der Betriebsposition 110 weitest möglich innerhalb des beziehungsweise relativ zu dem Schwenklagerkörper 104 nach oben angeordnet und kann durch eine Drehung der Spindel gegen den Uhrzeigersinn nach unten bewegt werden.

Bei Beginn dieser Drehung der Spindel gegen den Uhrzeigersinn bilden Schwenklagerkörper 104 und Schwenklagereinheit 103 zunächst eine fest verbundene Einheit. In diesem Zusammenhang blockiert der Blockierkörper 124. Sobald der Betätigungskörper 122 aufgrund der Drehung der Spindel gegen den Uhrzeigersinn so weit nach unten bewegt wurde, dass er den Blockierkörper 124 freigibt, da er nämlich in die Ausnehmung eingelassen ist (=Freigabe), kann sich die Kugelstange 107 bewegen. Diese Bewegung erfolgt lediglich in vertikale Richtung nach unten, da die Drehrichtung die Kugelstange mit ihrem zweiten freien Ende (Kragabschnitt) gegen einen an der Schwenklagereinheit 103 angeordneten Anschlag (Betriebsanschlag) drückt.

Außerdem verhindert die Kulissenbahn 115 eine Drehung des Schwenklagerkörpers 104 und somit ein Absenken der Kugelstange 107. Diese Funktion der Kulissenführung wird allerdings während dieser Bewegungsphase wegen des zuvor erwähnten "Betriebsanschlags" am Kugelstangenende nicht benötigt. Schon allein durch das Eigengewicht der Kugelstange 107 sinkt diese während der vorgenannt beschriebenen Bewegung ab und folgt der Abwärtsbewegung des Bewegungskörpers 122. Dies ist deutlich in Zusammenschau der Figuren 14 und 15 zu erkennen. Gegenüber der in Figur 3 dargestellten Betriebsposition 110, in welcher sich die Kupplungskugel 108 zumindest im Wesentlichen auf gleicher Höhe wie der Querträger 102 befindet, ist die Kupplungskugel 108, wie in Figur 4 dargestellt, bereits deutlich in Bezug auf den Querträger 102 abgesenkt. In diesem Zusammenhang bewegt sich die Kugelstange 107 außerdem aus dem Sicherungsanschlag 126 heraus. Dies ist in Figur 15 dargestellt.

Die Kulissenbahn 115 ist vorliegend in Form einer Nut ausgebildet. In die Kulissenbahn 115 greift der Kulissenstein 114 ein. Dieser ist vorliegend beispielsweise in Form eines Stiftes ausgebildet und in der Schwenklagereinheit 103 angeordnet, über deren innere Mantelfläche er hervorragt. Der Kulissenstein 114 ist außerdem vorgespannt, nämlich mittels eines Federelements, sodass der Kulissenstein 114 zumindest im Wesentlichen entlang seiner Längsrichtung eine Federkraft ausübt, nämlich in radiale Richtung der Schwenklagereinheit 103, d.h. senkrecht zu der ersten Schwenkachse.

Da der Kulissenstein 114 in Form eines Stiftes vorgespannt ist, drückt dieser ständig von außen auf den Schwenklagerkörper 104. Ist der Schwenklagerkörper 104 nun derart ausgerichtet, dass die Nut dort befindlich ist, wo der Stift angeordnet ist, kommt somit der Stift in Eingriff mit der Nut. Sodann ist der Stift durch die Nut geführt, nämlich indem der Stift seitlich durch die Wandung 120i beziehungsweise 120a der Nut sowie einen Nutgrund abgestützt ist. Solange der Stift in der Nut ist, ist somit ausschließlich eine Bewegung des Schwenklagerkörpers 104 in Richtung der Nut, das heißt vertikal, also parallel zu der ersten Schwenkachse 105, möglich.

Der Kulissenstein 114 ist vorliegend in einer Wandung der Schwenklagereinheit 103 angeordnet und zwar nach Art einer Schraube oder eines Gewindebolzens in eine mit einem Innengewinde versehenen Bohrung in der betreffenden Wandung der Schwenklagereinheit 103 eingeschraubt. In diesem Zusammenhang ist besonders gut verständlich, dass der Kulissenstein 114 durch das Federelement derart vorgespannt ist, dass eine am vorderen Ende des Kulissensteins 114 angeordnete federbelastete, aber gefasste Kugel ständig in Richtung des Schwenklagerkörpers 104 drückt. Die Figuren 16 und 17 zeigen dies besonders deutlich.

Während aufgrund der Drehung der Spindel der Betätigungskörper 122 also so weit nach unten bewegt wurde, dass er den Blockierkörper 124 freigibt, mithin einer Bewegung des Schwenklagerkörpers 104 vor diesem Hintergrund grundsätzlich möglich wäre, ist der vorgespannte Stift von Beginn an in Eingriff mit der Nut. Da diese zumindest im Wesentlichen senkrecht ausgerichtet und der Kulissenstein 114 zumindest an einer Wandung der Nut abgestützt ist, wird eine Drehung des Schwenklagerkörpers 104 verhindert. Eine Drehung des Schwenklagerkörpers wird aber bereits allein deshalb verhindert, weil das freie Ende der Kugelstange (Kragabschnitt) an einer an der fahrzeugfesten Schwenklagereinheit angeordneten Anschlagfläche anliegt, die eine Rotation der Kugelstange (von oben betrachtet) gegen den Uhrzeigersinn unterbindet.

Um neben dieser rein vertikalen (translatorischen) Bewegung außerdem eine rotatorische Bewegung insbesondere der Kugelstange 107 zulassen zu können, weist die Kulissenführung 113 außerdem an ihrem unteren Ende eine Rampe, also eine schräge Fläche, auf, an beziehungsweise mittels welcher der Kulissenstein 114 die Kulissenbahn 115 verlassen kann.

Hierfür ist vorgesehen, dass die Kulissenbahn 115 zumindest im Bereich der Rampe 118 einen Neigungsabschnitt 133 aufweist. Zumindest innerhalb dieses Neigungsabschnitts 133 verringert sich die Tiefe der Nut, und zwar von einer Tiefstelle 132 zu einer Hochstelle 131. In diesem Zusammenhang ist vorliegend vorgesehen, dass die Tiefe der Nut an der Hochstelle 131 zumindest im Wesentlichen null beträgt, das heißt, dass zumindest an der Hochstelle 131 keine Nut mehr vorliegt, sondern die Nut in die zylindrische Oberfläche des Schwenklagerkörpers übergeht, mithin daran anschließt. Mit anderen Worten kann der Kulissenstein 114 dort, wo die Nut eine solche Tiefe aufweist, die ausreichend ist, um den Kulissenstein 114 zu führen, die Nut nicht verlassen. Demgegenüber kann der Kulissenstein 114 die Nut im Bereich der Rampe 118 verlassen, da nämlich dort die Tiefe der Nut nicht (mehr) ausreichend ist, um den Kulissenstein 114 zu führen. Insbesondere liegt der Kulissenstein 114 unterhalb der Rampe 114 unmittelbar an der zylindrischen äußeren Mantelfläche des Schwenklagerkörpers an. Um dies zu ermöglichen, ist die Beweglichkeit der Kugel des Kulissensteins 114 in radiale Richtung, das heißt senkrecht zu ersten Schwenkachse, erforderlich. Ist der Kulissenstein außerhalb der Nut, ist die Kugel um das Maß der Nuttiefe gegen eine Federkraft weiter in das schraubenförmige Grundteil des Kulissensteins hineingedrückt.

Auf diese Weise ist der Kulissenstein 114 gewissenmaßen von der Nut befreit, sodass er sich frei auf der Oberfläche des Schwenklagerkörper 104 bewegen kann. Hierdurch ist somit die rotatorische Bewegung möglich. Mit anderen Worten vollzieht die Kugelstange 107 die vertikale Bewegung dann, wenn der Kulissenstein 114 innerhalb von der Nut entlang dieser die vertikale Kulissenbahn 115 entlangfährt. In gleicher Weise vollzieht die Kugelstange 107 die rotatorische Bewegung bei einer Drehung der Spindel gegen den Uhrzeigersinn dann, wenn der Kulissenstein 114 nicht innerhalb von der Nut angeordnet ist, sondern sich von dieser frei auf beziehungsweise an dem Schwenklagerkörper bewegen kann. Eine solche Drehrichtungsänderung der Spindel findet im unteren Totpunkt unterhalb der Betriebsposition statt. Zuvor wurde noch das Federelement 122 in Form eines Tellerfederpakets in die in Figur 18 rechts dargestellte komprimierte, das heißt gespannte Stellung gebracht, indem ein Stützanschlag am unteren Ende der Spindel auf die untere Tellerfeder des Pakets drückt und damit das ganze Paket gegen den Betätigungskörper 122 zusammenpresst. In der Folge steigt ein erforderliches Antriebsmoment des Spindelantriebs an, was durch einen Sensor erfasst und bei Überschreiten eines vorbestimmten Grenzwertes abgeschaltet wird. Sodann wird der Motor umgepolt. Dabei sollte ein Anfahrmoment der Antriebseinrichtung nach Umpolen des Motors nicht so groß sein, dass das Tellerfederpaket entspannt wird und dann "durchrutscht".

Durch die nun von der Steuerungselektronik initierte Drehung der Spindel im Uhrzeigersinn wird die Kugelstange 107 so weit gedreht (ungefähr um 90 Grad), dass diese mit einer Anschlagfläche an ihrem freien Kragende an einem Parkanschlag 140 der Schwenklagereinheit 103 anschlägt, hierdurch durch diesen blockiert beziehungsweise gestoppt wird.

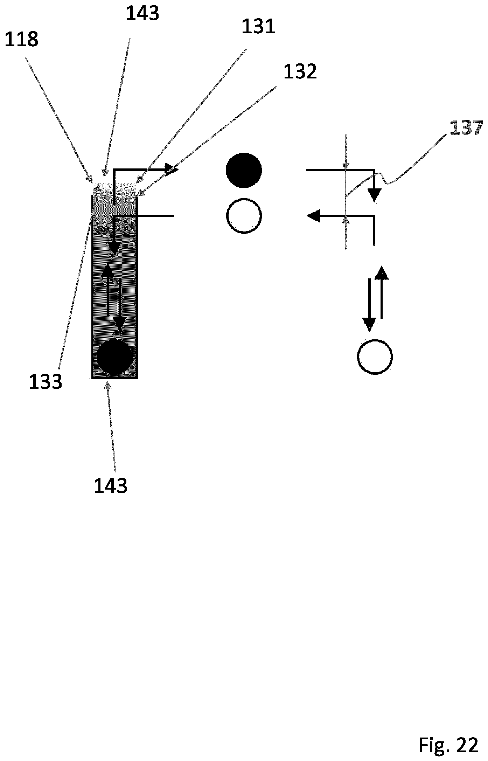

Nach der rein vertikalen Bewegung entlang der Nut befindet sich der Kulissenstein 114 ganz oben in der Nut. Die ist besonders gut in Figur 18 links zu erkennen. Sodann verlässt der Kulissenstein 114 die Nut und bewegt sich auf der Oberfläche des Schwenklagerkörpers 104. Dies ist besonders gut in Figur 22 zu erkennen. Hierdurch wird die rotatorische Bewegung vollzogen.

Hierbei weist die Kulissenbahn 115 eine Breite 119 sowie eine äußere Wandung 120a und eine innere Wandung 120i auf. In diesem Zusammenhang ist vorliegend vorgesehen, dass der Kulissenstein 114 zumindest teilweise entsprechend der Breite 119 in die Kulissenbahn 115 hineinragt. Mit anderen Worten steht der Kulissenstein 14 zumindest mit einem Teil der Breite 119 in der Kulissenbahn 115, sodass er in diese eingreifen kann. Während der Bewegung kommt der Kulissenstein 114 daher in Kontakt mit der Wandung 120a beziehungsweise 120i. Dies ist in den Figuren 18 und 22 dargestellt.

Nach der Verschwenkung der Kugelstange 107 von einem unteren Totpunkt unterhalb der Betriebsposition in einen unteren Totpunkt (der dieselbe Höhenlage besitzt) unterhalb der Parkposition schlägt das hintere Kugelstangenende an einen an der Schwenklagereinheit 103 angeordneten Parkanschlag, wodurch die Schwenkbewegung beendet wird. Die Spindel 127 bewirkt bei Fortsetzung ihrer Drehung nun eine Axialkraft auf das Federelement 138 in Richtung der Spindel 127, nun aufgrund der entgegengesetzten Drehrichtung im Sinne einer Entspannung des Tellerfederpakets. Bei weiterer Drehung der Spindel in diese Richtung (Uhrzeigersinn) findet eine reine vertikale Bewegung der Kugelstange 107 statt, während die Kugelstange 107 mit ihrem freien hinteren Ende an dem Parkanschlag anliegt. Der Kulissenstein befindet sich dabei außerhalb der Nut auf der Zylinderoberfläche des Schwenklagerkörpers. Die Spindel 127 dreht nun so lange im Uhrzeigersinn, bis die Kugelstange 107 die in Figur 16 gezeigte Parkposition erreicht, in der der Blockierkörper 114 der Blockiereinrichtung 116 (Teileinrichtung 116.1) in die dann relevante Ausnehmung in der Schwenklagereinheit.

Zusammenfassend ist das Tellerfederpaket bei einer Verschwenkung der Kugelstange 107 im Uhrzeigersinn (d.h. auch Rotation der Spindel im Uhrzeigersinn) stark verspannt, das heißt stark gestaucht, während es bei einer Verschwenkung der Kugelstange 107 gegen den Uhrzeigersinn (d.h. auch Rotation der Spindel gegen den Uhrzeigersinn) schwach verspannt, das heißt (im Vergleich) weniger gestaucht ist. Letzteres gilt bei einer Rückverschwenkung der Kugelstange von der Park- in die Betriebsposition, wie weiter unten noch erläutert wird.

Bei der (Rück-)Überführung der Kugelstange 107 von der Park- in die Betriebsposition ist der Ablauf folgendermaßen: Die Steuerung initiert eine Spindelrotation gegen den Uhrzeigersinn, so dass zunächst wieder die Teileinrichtung 116.1 der Blockiereinrichtung 116 in eine Freigabestellung überführt wird, wodurch die rein vertikale Abwärtsbewegung der Kugelstange 107 eingeleitet wird. Da das Tellerfederpaket unverspannt ist, dreht die Spindel quasi innerhalb des Betätigungskörpers durch, wodurch die axiale, d.h. vertikale Bewegung der Kugelstange erzielt wird. Sobald der untere Stützanschlag der Spindel mit der untersten Tellerfeder in Kontakt kommt, entsteht ein zunehmender Spannungszustand in dem Tellerfederpaket. Dies wiederum bewirkt ab einer bestimmten Spannung einen "Mitnahmeeffekt", d.h. die Kugelstange 107 wird entgegen ihrer Trägheit mit der Spindel entgegen dem Uhrzeigersinn um 90 Grad in Richtung auf die Betriebsposition bzw. zunächst in den zugeordneten unteren Totpunkt unterhalb der Betriebsposition verschwenkt. Da das Tellerfederpaket, das wie eine Rutschkupplung wirkt, bei dieser Rückverschwenkung weniger stark verspannt sein muss, als dies bei der maximal möglichen Verspannung auf dem "Hinweg" (Verspannung, bis Tellerfederpaket auf Block sind) der Fall ist, gelangt der Kulissenstein kurz vor Erreichen des an der Schwenklagereinheit befindlichen Betriebsanschlags für Kugelstange 107 in die Nut. In diesem Moment wir die Spindelrotation von einem an der Schwenklagereinheit 103 angeordneten Näherungsschalter abgeschaltet. Die Höhenverhältnisse der Kugelstange 107 bzw. des Schwenklagerkörpers 104 ergeben sich aus den Figuren 18 und 22.

Wie diese Figuren besonders deutlich zeigen, befindet sich die Kupplungskugel 108 in zwei Zwischenpositionen 112 auf unterschiedlichen Höhen (vergleiche zweite Schwenkachse 106 links in der Figur 18 und zweite Schwenkachse 106 rechts in der Figur 18). Links in Figur 18 ist gewissermaßen ein erster Zustand gezeigt, das heißt die Zwischenposition 112 befindet sich gerade vor der rotatorischen (Hin-)Bewegung, also um die Kugelstange 107 beispielsweise von der Parkposition 111 in die Betriebsposition 110 beziehungsweise umgekehrt zu überführen.

Anschließend, das heißt sobald die rotatorische Bewegung zurück Richtung Betriebsposition abgeschlossen ist, findet (wieder) die reine translatorische, also vertikale, Bewegung statt. Wie Figur 18 rechts zeigt, ist der Schwenklagerkörper 104 während der rotatorischen Bewegung nur so weit nach unten abgesenkt wird, dass der Kulissenstein 114 durch Hineinfallen in Eingriff mit der Nut kommen kann. Wie deutlich in Figur 18 (als Vergleich links und rechts) erkennbar ist, wird das Tellerfederpaket in einem Endabschnitt der Bewegung des Betätigungskörpers gestaucht, wenn sich der Schwenklagerkörper 104 nach unten bewegt.

Bei der anschließenden erneuten Umkehr der Drehrichtung der Spindel (Rotation im Uhrzeigersinn) wird der Schwenklagerkörper aufgrund des Eingriffs des Kulissensteins in die Nut an einer Rückverschwenkung in Richtung auf die Parkposition gehindert, sodass dann eine reine vertikale Bewegung nach oben erfolgt. Die Aufwärtsbewegung endet in der Betriebsposition und der Blockierung der Kugelstange dort mittels der Teileinrichtung 116.1 der Blockiereinrichtung.

Die Abweichung zwischen den Bahnlinien des Kulissensteins auf bzw. in (während einer Bewegung im Nutabschnitt) dem Schwenklagerkörper bei der Überführung der Kugelstange 107 von der Betriebs- in die Parkposition einerseits (weiter abgesenkter horizontaler Bahnabschnitt) und von der Parkposition 111 in die Betriebsposition 110 andererseits (weiter oben gelegener horizontaler Bahnabschnitt) kann auch als Hysterese bezeichnet werden.

Dies ist insbesondere in Zusammenschau der Figuren 18 und 22 erkennbar. Figur 22 zeigt die Bahnkurve des Kulissensteins während einer Bewegung von der Betriebsposition 111 in die Parkposition 110 (schwarz ausgefüllter Kreis) beziehungsweise umgekehrt (weiß ausgefüllter Kreis). Der Abstand dieser Bahnkurven stimmt exakt mit der in Figur 18 abgebildeten Hysterese 141 überein. Mit anderen Worten sind die Bahnkurven der jeweiligen Bewegung genau so viel zueinander versetzt, wie durch die Verspannung des Tellerfederpakets verursacht wird (Hysterese).

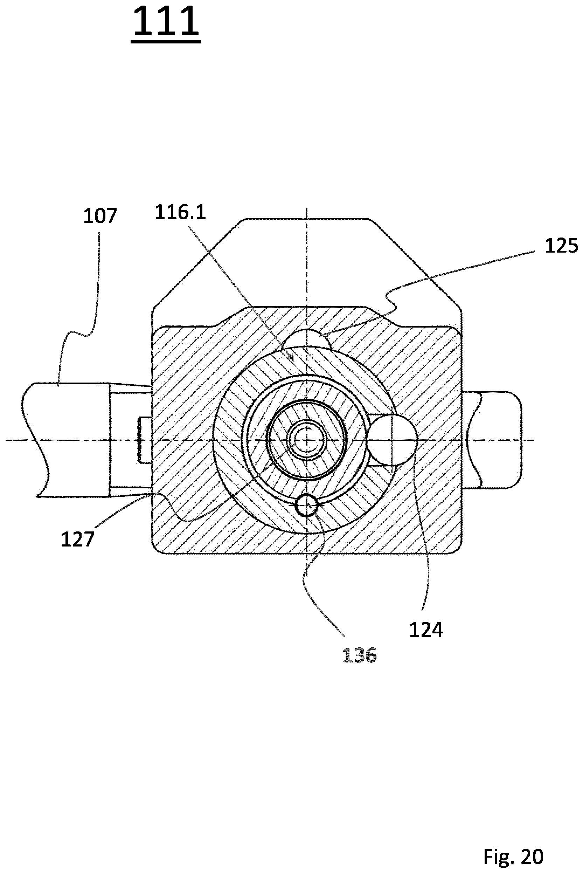

Um die Anhängevorrichtung 1 sowohl in der Parkposition 111 als auch in der Betriebsposition 110 zu sichern, ist weiterhin die Blockiereinrichtung 116 vorgesehen, die aus zwei Teileinrichtungen 116.1 und 116.2 besteht. Die Teileinrichtung 116.1 wird nun anhand der Figur 20 näher erläutert wird. Die Teileinrichtung 116.1 umfasst einen Blockierkörper 124, der vorliegend in Form einer Kugel ausgestaltet ist. Außerdem umfasst die Schwenklagereinheit 103 eine mit dem Blockierkörper 124 korrespondierende Aussparung 125. Dies ist außerdem in Figur 22 in einer schematischen Schnittansicht von oben auf die Schwenklagereinheit 3 dargestellt. Mit anderen Worten kann der Blockierkörper 124 zumindest teilweise in die Aussparung 125 eingreifen. Dies ist beispielsweise in Figur 15 dargestellt. Hierbei ist der Blockierkörper 124 in dem Schwenklagerkörper 104 angeordnet und bewegt sich entsprechend mit diesem. Mit anderen Worten wird der Blockierkörper 124 bei einer Aufwärts- oder Abwärtsbewegung in Bezug auf die erste Schwenkachse 105 entsprechend mit hoch beziehungsweise runter bewegt. Wieder mit anderen Worten kommt der Blockierkörper 124 genau dann in Eingriff mit der Aussparung 125, wenn sich beide auf derselben Höhe befinden. Ist der Blockierkörper 124 in der Aussparung 125 angeordnet, ist die Anhängevorrichtung 1 blockiert. Dies trifft sowohl in der Betriebs- als auch der Parkposition gleichermaßen zu, wobei es für beide Positionen jeweils eine eigene Aussparung 125 existiert, die um 90 Grad verdreht zueinander sind.

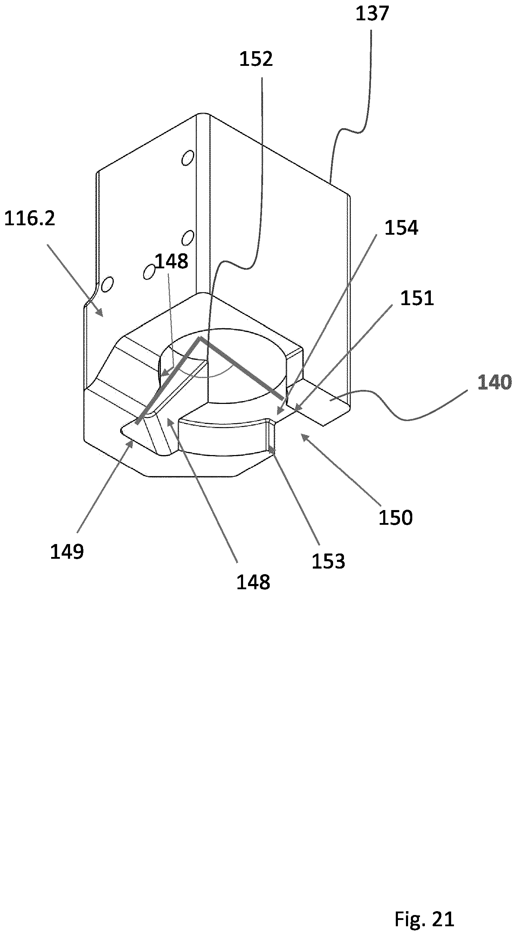

Nachfolgend wird die zweite Teileinrichtung 116.2 der Blockiereinrichtung 116 erläutert. Wie sich insbesondere aus der Figur 21 ergibt, ist die Unterseite der Schwenklagereinheit 103 mit einer komplexen Geometrie versehen, die insbesondere auf ein Zusammenwirken mit dem freien Kragabschnitt 145 der Kugelstange (siehe Figuren 14 bis 17) abgestimmt ist und gemeinsam mit diesem die zweite Teileinrichtung 116.2 der Blockiereinrichtung 116 bildet. In der Betriebsposition 110 der Kugelstange 107 (siehe auch Figur 14) befindet sich der Kragabschnitt 145 (freies Kugelstangenende) unter Ausbildung eines Formschlusses in einer angepassten Tasche 148 (siehe Figur 21). Durch diesen Eingriff ist sowohl eine Rotation der Kugelstange 107 um die erste Schwenkachse 105 (in beide Drehrichtungen), als auch ein Absenken oder Anheben der Kugelstange 107 (insbesondere auch durch eine Verschwenkung um die zweite Schwenkachse) unterbunden, jedenfalls sofern eine vertikale Bewegung des Schwenklagerkörpers 104 durch eine weitere Blockiereinrichtung unterbunden ist, was zum Beispiel durch eine Blockiereinrichtung nach Art der ersten Teileinrichtung 116.1 erfolgen kann. Die Kraftableitung erfolgt dabei aus dem Kugelstangenende über die in entgegengesetzte Richtungen weisenden beiden vertikalen Anschlagflächen 146 ("seitliche Anschlagflächen") des Kragabschnitts 145 und zwei ungefähr in einem rechten Winkel zueinander versetzt angeordnete hintere Anschlagflächen 147 ("dritte Anschlagflächen") ebenfalls des Kragabschnitts 145. Damit korrespondieren die Anschlagflächen 148 an der Tasche 149 ("Betriebstasche") der Schwenklagereinheit 103.

Die Verhältnisse in der Parkposition 111 sind zusätzlich zu Figur 21 auch aus der Figur 16 zu entnehmen. Die in diesem Fall wirksame weitere Tasche 150 ("Parktasche") in der Schwenklagereinheit 103 besitzt die Form einer Nut, die durch gegenüberliegende Anschlagflächen 151 und 153 begrenzt wird, welche wiederum mit den beiden in entgegengesetzte Richtungen weisenden Anschlagflächen 146 an dem Kragabschnitt 145 der Kugelstange 107 zusammenwirken und eine Rotation der Kugelstange 107 um die erste Schwenkachse 105 in beide Drehrichtungen unterbinden. Da ein Boden 155 der nutförmigen Tasche tiefer liegt als die "dritten" Anschlagflächen in der Betriebsposition 110, nimmt die Kupplungskugel 108 in der Betriebsposition 110 eine tiefere Position ein als in der Parkposition 111.

Sowohl in der Parkposition 111 als auch in der Betriebsposition 110 ragt die Spindel 127 aus dem Betätigungskörper 122 hervor. Da der Betätigungskörper 122 den Schwenklagerkörper 104 gewissermaßen "mitnimmt", ist auch der Schwenklagerkörper 104 in der Betriebsposition 110 beziehungsweise der Parkposition 111 zumindest nicht wesentlich relativ zu der Spindel 127 ausgefahren. Demgegenüber ist der Schwenklagerkörper 104 in der Zwischenposition 112 deutlich relativ zu der Spindel 127 beabstandet, mithin gegenüber dieser ausgefahren. Figur 15 zeigt dies. Mit anderen Worten wird der Schwenklagerkörper 104 nur ausgefahren, um die Anhängevorrichtung 101 von der Parkposition 111 in die Betriebsposition 110 zu verbringen beziehungsweise umgekehrt. Mit anderen Worten ist der Schwenklagerkörper 104 ausschließlich in der jeweiligen Zwischenposition 112 (Umkehrstellung/-position) ausgefahren, wie auch aus Zusammenschau der Figuren 14, 16 und 18 deutlich hervorgeht. Bei der Hinbewegung der Kugelstange von der Betriebs- in die Parkposition und umgekehrt (Rückbewegung) gibt es somit zwei unterschiedliche "untere Totpunkte" des Schwenklagerkörpers, von denen der bei der Hinbewegung aufgrund des Zusatzweges für die Tellerfederverspannung tiefer ist, als der bei Rückbewegung, bei der lediglich eine geringe Verspannung zur Erreichung eines gerade zur Verschwenkung ausreichenden Rutschmoments nötig ist.

### Bezugszeichenliste

- 1: Anhängevorrichtung
- 2: Fahrzeugteil
- 3: Schwenklagereinheit
- 4: Schwenklagerkörper
- 5: erste Schwenkachse
- 6: zweite Schwenkachse
- 7: Kugelstange
- 8: Kupplungskugel
- 9: Antriebseinrichtung
- 10: Betriebsposition
- 11: Parkposition
- 12: Zwischenposition
- 13: Kulissenführung
- 14: Kulissenstein
- 15: Kulissenbahn
- 16: Blockiereinrichtung
- 17: Umkehrabschnitt
- 18: Stufe
- 19: Breite
- 20i: Wandung innen
- 20a: Wandung außen
- 21: Tiefe
- 22: Betätigungskörper
- 23: Anschlag
- 24: Blockierkörper
- 25: Aussparung
- 26: Sicherungsanschlag
- 27: Spindel
- 28: Getriebe
- 29: Führungskörper
- 30: Federelement
- 31: Hochstelle
- 32: Tiefstelle
- 33: Neigungsabschnitt
- 34: Anschlagfläche
- 35: Ausnehmung
- 36: Passstift
- 101: Anhängevorrichtung
- 102: Fahrzeugteil
- 103: Schwenklagereinheit
- 104: Schwenklagerkörper
- 105: erste Schwenkachse
- 106: zweite Schwenkachse
- 107: Kugelstange
- 108: Kupplungskugel
- 109: Antriebseinrichtung
- 110: Betriebsposition
- 111: Parkposition
- 112: Zwischenposition
- 113: Kulissenführung
- 114: Kulissenstein
- 115: Kulissenbahn
- 116: Blockiereinrichtung
- 116.1: Teileinrichtung
- 116.2: Teileinrichtung
- 117: Umkehrabschnitt
- 118: Rampe
- 119: Breite
- 120i: Wandung innen
- 120a: Wandung außen
- 121: Tiefe
- 122: Betätigungskörper
- 123: Anschlag
- 124: Blockierkörper
- 125: Aussparung
- 126: Sicherungsanschlag
- 127: Spindel
- 128: Getriebe
- 129: Führungskörper
- 130: Federelement
- 131: Hochstelle
- 132: Tiefstelle
- 133: Neigungsabschnitt
- 134: Anschlagfläche
- 135: Ausnehmung
- 136: Passstift
- 137: Höhendifferenz
- 138: Federelement
- 139: Parkanschlag
- 140: Betriebsanschlag
- 141: äußere Führungsfläche
- 142: innere Führungsfläche
- 143: Extremstelle
- 144: Anschlagfläche
- 145: Kragabschnitt
- 146: Anschlagfläche
- 147: Anschlagfläche
- 148: Tasche
- 149: Anschlagfläche
- 150: Tasche
- 151: Anschlagfläche
- 152: Winkel
- 153: Anschlagfläche
- 154: Anschlagfläche
- 155: Boden

## Patentansprüche

1. Anhängevorrichtung (1) zur Anbringung an einem Heck eines Fahrzeugs, die Anhängevorrichtung (1) umfassend
a) eine mit einem Fahrzeugteil (2) in Kraft übertragender Weise verbindbare Schwenklagereinheit (3), die eine vertikale verlaufende erste Schwenkachse (5) definiert,
b) einen in oder an der Schwenklagereinheit (3) um die erste Schwenkachse (5) schwenkbar gelagerten Schwenklagerkörper (4), der eine zweite Schwenkachse (6) definiert,
c) eine Kugelstange (7), die an einem ersten Ende um die zweite Schwenkachse (6) schwenkbar und gelenkig mit dem Schwenklagerkörper (4) verbunden ist und an einem gegenüberliegenden freien zweiten Ende eine Kupplungskugel (8) aufweist,
d) eine Antriebseinrichtung (9), mittels der die Kugelstange (7) von einer Betriebsposition (10), in der sich die Kupplungskugel (8) frei zugänglich hinter dem Heck des Fahrzeugs befindet, in eine Parkposition (11) sowie umgekehrt überführbar ist, in der sich die Kupplungskugel (8) verdeckt unterhalb des Fahrzeugs befindet, wobei die Kugelstange (7) während der Überführung von der Betriebsposition (10) in die Parkposition (11) und umgekehrt relativ zu dem Schwenklagerkörper (4) rotatorisch um die zweite Schwenkachse (6) bewegbar ist.
e) eine Kulissenführung (13), mittels der der Schwenklagerkörper (4) während der Überführung von der Betriebsposition (10) in die Parkposition (11) sowie umgekehrt sowohl translatorisch in vertikale Richtung als auch rotatorisch um die vertikal ausgerichtete erste Schwenkachse (5) bewegbar ist, wobei ein Kulissenstein (14) an oder in der Schwenklagereinheit (3) oder dem Schwenklagerkörper (4) und eine mit dem Kulissenstein (14) zusammenwirkende Kulissenbahn (15) an oder in dem Schwenklagerkörper (4) oder der Schwenklagereinheit (3) angeordnet sind, und
f) mindestens eine Blockiereinrichtung (16) mittels der in der Parkposition (11) und/oder in der Betriebsposition (10) der Schwenklagerkörper (4) relativ zu der Schwenklagereinheit (3) und die Kugelstange (7) relativ zu dem Schwenklagerkörper (4) oder der Schwenklagereinheit (3) blockierbar sind.
**dadurch gekennzeichnet, dass** der Kulissenstein (14) zumindest mit einer Komponente seiner Bewegungsrichtung in eine Richtung senkrecht zu der ersten Schwenkachse (5) bewegbar ist, sodass der Kulissenstein (14) mit unterschiedlich tiefen Kulissenbahnen (15) zusammenwirken kann.

2. Anhängevorrichtung (1) nach Anspruch 1, **dadurch gekennzeichnet, dass** der Kulissenstein (14) in Richtung auf die erste Schwenkachse (5) hin oder von dieser weg elastisch vorgespannt ist, insbesondere mittels eines metallischen Federelements, das sich vorzugsweise in der Schwenklagereinheit (3) oder dem Schwenklagerkörper (4) abstützt.

3. Anhängevorrichtung (1) nach Anspruch 1 oder 2, **dadurch gekennzeichnet, dass** die Kulissenbahn (15) in einem Umkehrabschnitt, in dem sich eine vertikale Bewegungsrichtung des Schwenklagerkörpers (4) umkehrt, eine Stufe (18) aufweist, die von dem Kulissenstein (15) bei der Überführung der Kugelstange (7) von der Parkposition (11) in die Betriebsposition (10) oder umgekehrt überfahrbar ist, wodurch der Kulissenstein (15) sich zumindest mit einer zu der Bahnrichtung senkrechten Bewegungskomponente die Stufe (18) hinab bewegt.

4. Anhängevorrichtung (1) nach Anspruch 3, **dadurch gekennzeichnet, dass** die Kulissenbahn (15) im Bereich der Stufe (18) eine solche quer zu der Bahnrichtung gemessene Breite (19) aufweist, dass die Stufe (18) bei der Überführung der Kugelstange (7) von der Parkposition (11) in die Betriebsposition (10) oder umgekehrt, umfahrbar ist, wobei vorzugsweise der Kulissenstein (14) während der Umfahrung der Stufe (18) mit einer der Stufe (18) abgewandten Wandung (20a, i) der Kulissenbahn (15) in kraftübertragendem Kontakt steht.

5. Anhängevorrichtung (1) nach Anspruch 1 oder 2, **dadurch gekennzeichnet, dass** - in Bahnrichtung betrachtet -
a) ausgehend von einer Tiefstelle (32) eine Tiefe der Kulissenbahn (15) in einem Neigungsabschnitt (33) jeweils in einem Teil der Breite (19) der Kulissenbahn (15) bis zu einer Stufe (18) zunimmt, wobei vorzugsweise eine Tiefe hinter der Stufe (18) einer Tiefe an oder vor der Tiefstelle (32) entspricht und/oder
b) ausgehend von einer Hochstelle (31) eine Tiefe (21) der Kulissenbahn (15) in einem Neigungsabschnitt (33) bis zu einer Stufe (18) abnimmt, wobei vorzugsweise eine Tiefe hinter der Stufe (18) einer Tiefe an oder vor der Hochstelle (31) entspricht

6. Anhängevorrichtung (1) nach Anspruch 3 **dadurch gekennzeichnet, dass** in dem Neigungsabschnitt (33) der Kulissenbahn (15) neben einer Absenkspur, in der sich die Tiefe (21) der Kulissenbahn (15) bis zu der Stufe (18) vergrößert, jeweils eine Umfahrungsspur angeordnet ist, und/oder in dem Neigungsabschnitt (33), der Kulissenbahn (15) neben der Anstiegspur, in der sich die Tiefe (21) der Kulissenbahn (15) bis zu der Stufe (18) reduziert, eine Umfahrungsspur angeordnet ist.

7. Anhängevorrichtung (1) nach einem der Ansprüche 1 bis 4 **dadurch gekennzeichnet, dass** die Kulissenbahn (15) eine Nut in dem vorzugsweise zylindrisch ausgebildeten Schwenklagerkörper (4) oder der vorzugsweise hülsenförmig ausgebildeten Schwenklagereinheit (3) und der Kulissenstein (14) ein mit der Schwenklagereinheit (3) verbundener, vorzugsweise über deren innere Mantelfläche radial vorstehender, oder mit dem Schwenklagerkörper (4) verbundener, vorzugsweise über dessen äußerer Mantelfläche radial vorstehender, und jeweils in die Nut eingreifender Stift ist, wobei vorzugsweise eine die Schwenklagereinheit (3) bildende Hülse und ein den Schwenklagerkörper (4) bildender und innerhalb der Hülse angeordneter Zylinderkörper koaxial zueinander ausgerichtet sind.

8. Anhängevorrichtung (1) nach den Ansprüchen 6 und 7 7 **dadurch gekennzeichnet, dass** ein Durchmesser oder eine Breite (19) des Stifts kleiner ist als eine quer zu der Bahnrichtung gemessene Breite (19) der Kulissenbahn (15) in der Absenkspur oder der Umfahrungsspur.

9. Anhängevorrichtung (1) nach den Ansprüchen 3 und 7 oder 3 und 8, **dadurch gekennzeichnet, dass** die Umfahrungsspur seitlich neben der Stufe (18) angeordnet ist.

10. Anhängevorrichtung (1) nach den Ansprüchen 3 und 7 oder 3 und 8 oder 3 und 9, **dadurch gekennzeichnet, dass** die Umfahrungsspur in einem Bereich der Stufe (18) zumindest im Wesentlichen ein Niveau der Hochstelle (31) aufweist.

11. Anhängevorrichtung (1) nach den Ansprüchen 3 und 7 **dadurch gekennzeichnet, dass** der Stift zumindest auf einer Seite zylindrisch und die Stufe (18) halbzylindrisch ausgebildet sind, wobei eine Achse des Stifts und eine Achse eines von der Stufe (18) gebildeten Halbzylinders koaxial zueinander ausgerichtet sind und Mantelflächen des Stifts einerseits und der Stufe (18) andererseits sich in einer Umkehrposition aneinander anschmiegen.

12. Anhängevorrichtung (1) nach Anspruch 6 **dadurch gekennzeichnet, dass** eine Wandung (20a, i) der Absenkspur oder der Stufenspur (18) der Kulissenbahn (15) tangential in eine Mantelfläche des die Stufe (18) bildeten Halbzylinders übergeht.

13. Anhängevorrichtung (1) nach einem der Ansprüche 1 bis 11 **dadurch gekennzeichnet, dass** die Kulissenbahn (15) in einer Abwicklung der inneren Mantelfläche der Schwenklagereinheit (3) oder der äußeren Mantelflächen des Schwenklagerkörpers (4) V-förmig oder U-förmig oder C-förmig ist, wobei sich vorzugsweise in einer Extremstelle des V oder U oder C der Umkehrbereich befindet.

14. Anhängevorrichtung (1) nach Anspruch 6 **dadurch gekennzeichnet, dass** die Kulissenbahn (15) eine äußere Führungsfläche (141) und eine innere Führungsfläche (142) aufweist, wobei die Stufe (18) zwischen einer Extremstelle (143) der inneren Führungsfläche und einer Extremstelle der äußeren Führungsfläche angeordnet ist.

15. Anhängevorrichtung (1) nach einem der Ansprüche 1 bis 14, **dadurch gekennzeichnet, dass** die Kulissenbahn (15, 115) linear und parallel zu der ersten Schwenkachse (5, 105) verläuft.

## Claims

1. A hitch (1) for attaching to the rear of a vehicle, the hitch (1) thereby comprising
a) a pivot bearing unit (3) which can be connected to a vehicle part (2) in a force-transmitting manner, which defines a vertically running first pivot axis (5),
b) a pivot bearing body (4) mounted in or on the pivot bearing unit (3) around the first pivot axis (5), which defines a second pivot axis (6),
c) a ball rod (7) which can be pivoted around the second pivot axis (6) and is articulately connected to the pivot bearing body (4) at a first end and comprises a coupling ball (8) at a oppositely lying second free end,
d) a drive device (9) by means of which the ball rod (7) can be transferred from an operating position (10), in which the coupling ball (8) is freely accessible behind the rear of the vehicle, into a park position (11) and vice versa, in which the coupling ball (8) is concealed below the vehicle, wherein the ball rod (7) is can be rotationally moved around the second pivot axis (6) relative to pivot bearing body (4) during the transfer from the operating position (10) into the park position (11) and vice versa,
e) a slide guide (13) by means of which the pivot bearing body (4) can be moved both translationally in the vertical direction as well as rotationally around the vertically aligned first pivot axis (5) during the transfer from the operating position (10) into the park position (11) and vice versa, wherein a sliding block (14) on or in the pivot bearing unit (3) or the pivot bearing body (4) and a sliding track (15) interacting with the sliding block (14) are arranged on or in the pivot bearing body (4) or the pivot bearing unit (3), and
f) at least one locking device (16) by means of which, in the park position (11) and/or in the operating position (10), the pivot bearing body (4) can be blocked relative to the pivot bearing unit (3) and the ball rod (7) can be blocked relative to the pivot bearing body (4) or the pivot bearing unit (3).
**characterized in that** the sliding block (14) can be moved in one direction perpendicular to the first pivot axis (5) with at least one component of its direction of movement so that the sliding block (14) can interact with sliding tracks consisting of different depths (15).

2. The hitch (1) according to Claim 1, **characterized in that** the sliding block (14) is elastically prestressed in the direction of or away from the first pivot axis (5), in particular, by means of a metallic spring element which is preferably supported in the pivot bearing unit (3) or the pivot bearing body (4).

3. The hitch (1) according to Claim 1 or 2, **characterized in that** the sliding track (15) in a reversing section in which a vertical direction of motion of the pivot bearing body (4) is reversed, comprises a step (18) which can be driven over by the sliding block (15) when the ball rod (7) is transferred from the park position (11) into the operating position (10) or vice versa, whereby the sliding block (15) moves down the step (18) with a motion component perpendicular to the direction of the track.

4. The hitch (1) according to Claim 3, **characterized in that** the sliding track (15) in the area of the step (18) comprises such a width (19) measured transversely to the direction of the track that the step (18) can be bypassed when transferring the ball rod (7) from the park position (11) into the operating position (10) or vice versa, wherein, preferably, the sliding block (14) is in force-transmitting contact with a wall (20a, i) of the sliding track (15) facing away from the step (18) while bypassing the step (18).

5. The hitch (1) according to Claim 1 or 2, **characterized in that** - viewed in the direction of the track -
a) starting from a low point (32), a depth of the sliding track (15) respectively increases in an inclined section (33) in a part of the width (19) of the sliding track (15) up to a step (18), wherein, preferably, a depth behind the step (18) corresponds to a depth at or in front of the low point (32) and/or
b) starting from a high point (31), a depth (21) of the sliding track (15) decreases in an incline section (33) up to a step (18), wherein, preferably, a depth behind the step (18) corresponds to a depth at or in front of the high point (31).

6. The hitch (1) according to Claim 3, **characterized in that,** in the inclined section (33) of the sliding track (15), in addition to a lowering track, in which the depth (21) of the sliding track (15) increases up to the step (18), and/or a bypass track is arranged in the gradient section (33) of the sliding track (15) next to the ascent track in which the depth (21) of the sliding track (15) is reduced to the step (18).

7. The hitch (1) according to any one of the Claims 1 to 4, **characterized in that** the sliding track (15) is a groove in the preferably cylindrically shaped pivot bearing body (4) or the preferably sleeve-shaped pivot bearing unit (3) and the sliding block (14) is a pin that is connected to the pivot bearing unit (3), preferably radially projecting over its inner shell surface, or one that is connected to the pivot bearing body (4), preferably radially projecting over its outer shell surface, thereby respectively engaging into the groove, wherein, preferably, a sleeve forming the pivot bearing unit (3) and a cylinder body forming the pivot bearing body (4) and arranged within the sleeve are coaxially aligned to each other.

8. The hitch (1) according to Claims 6 and 7, **characterized in that** a diameter or width (19) of the pin is less than a width (19) of the sliding track (15) measured transversely to the direction of the web in the lowering track or the bypass track.

9. The hitch (1) according to Claims 3 and 7 or 3 and 8, **characterized in that** the bypass track is arranged laterally next to the step (18).

10. The hitch (1) according to Claims 3 and 7 or 3 and 8 or 3 and 9, **characterized in that** the bypass track in an area of the step (18) substantially comprises at least one level of the elevation (31).

11. The hitch (1) according to Claims 3 and 7, **characterized in that** the pin is cylindrical at least on one side and the step (18) is semi-cylindrical, wherein one axis of the pin and one axis of a half-cylinder formed by the step (18) are coaxially aligned with respect to each other and the shell surfaces of the pin on the one hand and the step (18) on the other hand nestle against each other in an inverted position.

12. The hitch (1) according to Claim 6, **characterized in that** a wall (20a, i) of the lowering track or the stepped track (18) of the sliding track (15) transitions tangentially into a shell surface of the half-cylinder forming the step (18).

13. The hitch (1) according to any one of the Claims 1 to 11, **characterized in that** the sliding track (15) is V-shaped or U-shaped or C-shaped in a flat projection of the inner shell surface of the pivot bearing unit (3) or the outer shell surfaces of the pivot bearing body (4), wherein the reversal region is preferably located at an extreme point of the V or U or C.

14. The hitch (1) according to Claim 6, **characterized in that** the sliding track (15) comprises an outer guide surface (141) and an inner guide surface (142), wherein the step (18) is arranged between an extreme point (143) of the inner guide surface and an extreme point of the outer guide surface.

15. The hitch (1) according to any one of the Claims 1 to 14, **characterized in that** the sliding track (15, 115) runs linearly and parallel to the first pivot axis (5, 105).

## Revendications

1. Dispositif d'attelage (1), destiné à être monté sur un arrière d'un véhicule, le dispositif d'attelage (1) comprenant
a) une unité (3) à palier pivotant, susceptible d'être assemblée de manière à transmettre la force avec une partie (2) du véhicule, qui définit un premier axe de pivotement (5) s'écoulant à la verticale,
b) un corps (4) de palier pivotant, logé dans ou sur l'unité (3) à palier pivotant de manière pivotante autour du premier axe de pivotement (5), qui définit un deuxième axe de pivotement (6),
c) une barre d'attelage (7), qui par une première extrémité est assemblée de manière pivotante autour du deuxième axe de pivotement (6) et de manière articulée avec le corps (4) de palier pivotant et qui sur une deuxième extrémité libre placée au vis-à-vis comporte une boule d'attelage (8),
d) un système d'entraînement (9), au moyen duquel la barre d'attelage (7) est transférable d'une position opérationnelle (10), dans laquelle la boule d'attelage (8) se trouve librement accessible derrière l'arrière du véhicule, dans une position de stationnement (11), ainsi qu'inversement, dans laquelle la boule d'attelage (8) se trouve recouverte en-dessous du véhicule, pendant le transfert de la position opérationnelle (10) dans la position de stationnement (11) et inversement, la barre d'attelage (7) étant déplaçable en rotation autour du deuxième axe de pivotement (6) par rapport au corps (4) de palier pivotant,
e) un guidage à coulisse (13), au moyen duquel, pendant le transfert de la position opérationnelle (10) dans la position de stationnement (11) et inversement, le corps (4) de palier pivotant est déplaçable aussi bien en translation dans la direction verticale qu'également en rotation autour du premier axe de pivotement (5) orienté à la verticale, un coulisseau (14) étant placé sur ou dans l'unité (3) à palier pivotant ou le corps (4) de palier pivotant et une piste de coulissement (15) qui interagit avec le coulisseau (14) étant placée sur ou dans le corps (4) de palier pivotant ou l'unité (3) à palier pivotant et
f) au moins un système de blocage (16), au moyen duquel, dans la position de stationnement (11) et / ou dans la position opérationnelle (10), le corps (4) de palier pivotant est susceptible d'être bloqué par rapport à l'unité (3) à palier pivotant et la barre **d'attelage** (7) est susceptible **d'être** bloquée par rapport au corps (4) de palier pivotant ou à l'unité (3) à palier pivotant.
**caractérisé en ce que** le coulisseau (14) est déplaçable avec au moins un composant de sa direction de déplacement dans une direction à la perpendiculaire du premier axe de pivotement (5), de telle sorte que le coulisseau (14) puisse interagir avec des pistes de coulissement (15) de différentes profondeurs.

2. Dispositif d'attelage (1) selon la revendication 1, **caractérisé en ce que** le coulisseau (14) est élastiquement précontraint dans la direction vers le premier axe de pivotement (5) vers ou en éloignement de celui-ci, notamment au moyen d'un élément à ressort métallique, qui s'appuie de préférence dans l'unité (3) à palier pivotant ou dans le corps (4) de palier pivotant.

3. Dispositif d'attelage (1) selon la revendication 1 ou 2, **caractérisé en ce que** dans une portion de renvoi, dans laquelle une direction de déplacement vertical corps (4) de palier pivotant s'inverse, la piste de coulissement (15) comporte un échelon (18), qui lors du transfert de la barre d'attelage (7) de la position de stationnement (11) dans la position opérationnelle (10) ou inversement peut être écrasée par le coulisseau (15), suite à quoi, le coulisseau (15) se déplace au moins avec une composante de déplacement perpendiculaire à la direction de la piste vers le bas sur l'échelon (18).

4. Dispositif d'attelage (1) selon la revendication 3, **caractérisé en ce que** la piste de coulissement (15) présente dans la zone de l'échelon (18) une largeur (19) telle, mesurée à la transversale de la direction de la piste, que l'échelon (18) soit contournable lors du transfert de la barre d'attelage (7) de la position de stationnement (11) dans la position opérationnelle (10) ou inversement, pendant le contournement de l'échelon (18), le coulisseau (14) se trouvant de préférence en contact à transmission de force avec une paroi (20a, i) de la piste de coulissement (15) opposée à l'échelon (18).

5. Dispositif d'attelage (1) selon la revendication 1 ou 2, **caractérisé en ce que** (considérée dans la direction de la piste)
a) en partant d'un point bas (32), une profondeur de la piste de coulissement (15) dans une portion d'inclinaison (33) augmente respectivement dans une partie de la largeur (19) de la piste de coulissement (15) jusqu'à un échelon (18), de préférence une profondeur à l'arrière de l'échelon (18) correspondant à une profondeur sur ou à l'avant du point bas (32) et / ou
b) en partant d'un point haut (31), une profondeur (21) de la piste de coulissement (15) dans une portion d'inclinaison (33) diminue jusqu'à un échelon (18), de préférence une profondeur à l'arrière de l'échelon (18) correspondant à une profondeur sur ou à l'avant du point haut (31).

6. Dispositif d'attelage (1) selon la revendication 3, **caractérisé en ce que** dans la portion d'inclinaison (33) de la piste de coulissement (15), à côté d'une voie descendante, dans laquelle la profondeur (21) de la piste de coulissement (15) s'agrandit jusqu'à l'échelon (18) est placée respectivement une voie de contournement et / ou dans la portion d'inclinaison (33), la piste de coulissement (15) est placée à côté de la voie montante, dans laquelle la profondeur (21) de la piste de coulissement (15) se réduit jusqu'à l'échelon (18).

7. Dispositif d'attelage (1) selon l'une quelconque des revendications 1 à 4, **caractérisé en ce que** la piste de coulissement (15) est une rainure dans le corps (4) de palier pivotant conçu de préférence de forme cylindrique ou dans l'unité (3) à palier pivotant conçue de préférence en forme de douille et le coulisseau (14) est une tige, assemblée avec l'unité (3) à palier pivotant, de préférence par l'intermédiaire de sa surface enveloppante intérieure en débordant en direction radiale, ou assemblée avec le corps (4) de palier pivotant, de préférence par l'intermédiaire de sa surface enveloppante extérieure, en débordant en direction radiale et s'engageant respectivement dans la rainure, de préférence une douille constituant l'unité (3) à palier pivotant et un corps cylindrique constituant le corps (4) de palier pivotant et placé à l'intérieur de la douille étant orientés de manière coaxiale l'un par rapport à l'autre.

8. Dispositif d'attelage (1) selon les revendications 6 et 7, **caractérisé en ce qu'**un diamètre ou une largeur (19) de la tige est inférieure à une largeur (19) de la piste de coulissement (15) mesurée à la transversale de la direction de la piste dans la voie descendante ou dans la voie de contournement.

9. Dispositif d'attelage (1) selon les revendications 3 et 7 ou 3 et 8, **caractérisé en ce que** la voie de contournement est placée latéralement à côté de l'échelon (18).

10. Dispositif d'attelage (1) selon les revendications 3 et 7 ou 3 et 8 ou 3 et 9, **caractérisé en ce que** la voie de contournement présente dans une zone de l'échelon (18) au moins sensiblement un niveau du point haut (31).

11. Dispositif d'attelage (1) selon les revendications 3 et 7, **caractérisé en ce que** la tige est conçue au moins sur un côté de forme cylindrique et l'échelon (18) est conçu de forme semi-cylindrique, un axe de la tige et un axe d'un semi-cylindre constitué par l'échelon (18) étant orientés de manière coaxiale l'un par rapport à l'autre et des surfaces enveloppantes de la tige d'une part et de l'échelon (18) d'autre part étant adjacentes l'une à l'autre dans une position de renversement.

12. Dispositif d'attelage (1) selon la revendication 6, **caractérisé en ce qu'**une paroi (20a, i) de la voie descendante ou de la voie de l'échelon (18) de la piste de coulissement (15) passe de manière tangentielle dans une surface enveloppante du semi-cylindre qui constitue l'échelon (18).

13. Dispositif d'attelage (1) selon l'une quelconque des revendications 1 à 11, **caractérisé en ce que** dans un déroulement de la surface enveloppante intérieure de l'unité (3) à palier pivotant ou de la surface enveloppante extérieure du corps (4) de palier pivotant, la piste de coulissement (15) est en forme de V ou en forme de U ou en forme de C, la zone de renvoi se trouvant de préférence dans un point extrême du V ou du U ou du C.

14. Dispositif d'attelage (1) selon la revendication 6, **caractérisé en ce que** la piste de coulissement (15) comporte une surface de guidage (141) extérieure et une surface de guidage (142) intérieure, l'échelon (18) étant placé entre un point extrême (143) de la surface de guidage intérieure et un point extrême de la surface de guidage extérieure.

15. Dispositif d'attelage (1) selon l'une quelconque des revendications 1 à 14, **caractérisé en ce que** la piste de coulissement (15, 115) s'écoule sous forme linéaire et à la parallèle du premier axe de pivotement (5, 105).
